# EUROPEAN PATENT APPLICATION

(11) **EP 4 161 076 A1**
(43) Date of publication of application: **05.04.2023**
(21) Application number: 20937374.5
(22) Date of filing: 26.05.2020
(51) Int. Cl.: H04N 19/30, H04N 19/164, H04N 19/34, H04N 19/36, H04N 19/37, H04N 19/42, H04N 21/2343, H04N 21/238, H04N 21/63

(54) **VIDEO TRANSMISSION METHOD, DEVICE AND SYSTEM**

(71) Applicant: Huawei Technologies Co., Ltd., Longgang District, Shenzhen, Guangdong 518129 (CN)
(72) Inventor: ZHANG, Yixuan, Shenzhen, Guangdong 518129 (CN); CHEN, Shaolin, Shenzhen, Guangdong 518129 (CN); MENG, Lin, Shenzhen, Guangdong 518129 (CN); FENG, Junkai, Shenzhen, Guangdong 518129 (CN)
(74) Representative: Gill Jennings & Every LLP
(86) International application number: PCT/CN2020/092407
(87) International publication number: WO 2021/237474

(57) **Abstract**

Embodiments of this application provide a video transmission method, apparatus, and system, to reduce an end-to-end transmission delay of video data. The method includes: A transmit end obtains a first frame of image of the video data, where the first frame of image includes a plurality of sub-images, and the plurality sub-images include a first sub-image and a second sub-image; the transmit end performs layered encoding on the first sub-image to obtain a plurality of layers of bitstreams of the first sub-image; the transmit end sends the plurality of layers of bitstreams of the first sub-image to a receive end; the receive end decodes the plurality of layers of bitstreams of the first sub-image to obtain the first sub-image; the receive end displays the first sub-image; the transmit end performs layered encoding on the second sub-image to obtain a plurality of layers of bitstreams of the second sub-image; the transmit end sends the plurality of layers of bitstreams of the second sub-image to the receive end; the receive end decodes the plurality of layers of bitstreams of the second sub-image to obtain the second sub-image; and the receive end displays the second sub-image.

## Description

### TECHNICAL FIELD

This application relates to the multimedia field, and more specifically, to a video transmission method, apparatus, and system in the multimedia field.

### BACKGROUND

A short-range wireless projection technology is a complete set of technologies in which video data generated by a mobile terminal with a strong processing capability, for example, a game image rendered by a graphics processing unit (graphics processing unit, GPU) is encoded and compressed, and is sent to a device with a weak processing capability but good display effect in a wireless transmission manner, for example, a television or a virtual reality (virtual reality, VR) helmet for display. This technology can implement connection and information sharing between a mobile device and another device.

Short-range wireless projection applications, such as game projection and VR glasses, provide data interaction. Therefore, an end-to-end delay of a projection system is required to be as small as possible. In addition, a wireless channel of a wireless local area network (wireless fidelity, Wi-Fi) is easily affected by a plurality of factors in a use environment such as noise and an interference signal. As a result, transmission bandwidth is unstable, causing data loss and further causing an image quality problem. Therefore, the projection system needs to have as strong anti-interference capability as possible against a channel change. To sum up, both the end-to-end delay and the anti-interference capability against the channel change are important factors that affect performance of the projection system and user experience.

In a short-range wireless projection scenario, currently a scalable coding scheme may be used to encode and transmit a video. Scalable coding refers to encoding a source video into a plurality of layers of different quality/resolution that mutually refer to each other, where a higher quality/larger resolution layer refers to and only refers to an equal or lower quality/smaller resolution layer during encoding. During transmission, transmission is sequentially performed from the lower quality/smaller resolution layer to the higher quality/larger resolution layer. A larger quantity of layers received by a decoder indicates better quality of a reconstructed image.

However, in an existing scalable coding scheme, a transmit end encodes a frame of image into a plurality of layers of bitstreams of different quality/resolution that mutually refer to each other, and sends each layer of bitstreams to a receive end layer by layer. The receive end can reconstruct this frame of image only after transmission of the plurality of layers of bitstreams is completed, and display and output this frame of image. This has a high end-to-end delay, thereby affecting user experience.

### SUMMARY

Embodiments of this application provide a video transmission method, apparatus, and system, to reduce an end-to-end transmission delay of video data and improve robustness to a channel change.

According to a first aspect, an embodiment of this application provides a video transmission method. The method may be applied to a video transmission system. The video transmission system includes a transmit end and a receive end. The method may include the following steps: The transmit end obtains a first frame of image of video data, where the first frame of image includes a plurality of sub-images, and the plurality sub-images include a first sub-image and a second sub-image; the transmit end performs layered encoding on the first sub-image to obtain a plurality of layers of bitstreams of the first sub-image; the transmit end sends the plurality of layers of bitstreams of the first sub-image to the receive end; the receive end receives the plurality of layers of bitstreams of the first sub-image from the transmit end; the receive end decodes the plurality of layers of bitstreams of the first sub-image to obtain the first sub-image; the receive end displays the first sub-image; the transmit end performs layered encoding on the second sub-image to obtain a plurality of layers of bitstreams of the second sub-image; the transmit end sends the plurality of layers of bitstreams of the second sub-image to the receive end; the receive end receives the plurality of layers of bitstreams of the second sub-image from the transmit end; the receive end decodes the plurality of layers of bitstreams of the second sub-image to obtain the second sub-image; and the receive end displays the second sub-image.

It should be noted that, in an existing video transmission method, when layered encoding is performed on a plurality of sub-images of a frame of image, second-layer encoding is performed on each sub-image only after a first layer of bitstream of each sub-image is obtained through encoding, and third-layer encoding is performed on each sub-image after a second layer of bitstream of each sub-image is obtained, and so on. However, in this coding scheme, the receive end does not display this frame of image until all the plurality of layers of bitstreams of this frame of image are successfully received, or decodes and displays this frame of image based on a received bitstream after specified transmission time expires. Therefore, a transmission delay is large. However, in this embodiment of this application, when layered encoding is performed on the plurality of sub-images of the frame of image, layered encoding is performed on the second sub-image only after encoding of the plurality of layers of bitstreams of the first sub-image is completed. In this way, two actions of performing layered encoding on the second sub-image and sending the plurality of layers of bitstreams of the first sub-image to the receive end may be performed in parallel. The receive end may first display the first sub-image after receiving the plurality of layers of bitstreams of the first sub-image, and does not need to wait for a bitstream of another sub-image, which greatly reduces an end-to-end delay when an image is presented to a user.

Optionally, the method may be applied to a short-range wireless projection scenario. Short-range wireless projection is a technology in which video data generated by a mobile terminal with a strong processing capability is encoded and compressed, and wirelessly sent to a device with a weak processing capability but good display effect for display.

For example, the transmit end is a mobile phone, and the receive end is VR glasses. The mobile phone may project a rendered game image to a display interface of the VR glasses.

For another example, the transmit end is a notebook computer, and the receive end is a television set. The notebook computer may project a television picture to a display interface of the television set.

It should be noted that the video data may include a plurality of frames of images arranged according to a frame sequence, and the plurality of frames of images include the first frame of image and the second frame of image.

Optionally, the transmit end may obtain the video data in a plurality of manners. This is not limited in this embodiment of this application.

In a possible implementation, the transmit end may receive the video data from a first apparatus.

In another possible implementation, the transmit end may generate the video data by itself.

In still another possible implementation, the transmit end may obtain raw video data, and preprocess the raw video data to obtain a processed video data.

Optionally, before the transmit end performs layered encoding on the first sub-image to obtain the plurality of layers of bitstreams of the first sub-image, the transmit end may divide the first frame of image into the plurality of sub-images.

It should be noted that the sub-image described in this embodiment of this application may be understood as a granularity, for example, a minimum granularity, for encoding the video data by the transmit end or decoding the video data by the receive end.

Optionally, the sub-image may be but is not limited to a slice (slice), a tile (tile), a block (block), a macro block (macro block, MB), or a largest coding block (largest coding unit, LCU) of the frame of image. This is not limited in this embodiment of this application.

Optionally, the transmit end may perform layered encoding on the first sub-image based on a plurality of video coding protocols. This is not limited in this embodiment of this application.

In a possible implementation, the transmit end may perform layered encoding on the first sub-image based on the H.264 scalable video coding (SVC) protocol or the H.265 scalable video coding (SHVC) protocol.

In another possible implementation, the transmit end may perform layered encoding on the first sub-image based on a future scalable video coding protocol, for example, the H.266 scalable video coding protocol.

It should be noted that there are different reference relationships between the plurality of layers of bitstreams of the first sub-image. For example, the transmit end may first perform encoding to obtain a bitstream of a base layer of the first sub-image, perform encoding by referring to the base layer to obtain a bitstream of an enhancement layer 1, and then perform encoding by referring to the bitstream of the enhancement layer 1 to obtain a bitstream of an enhancement layer 2. Image quality (or a bit rate) increases sequentially according to a coding order of the base layer, the enhancement layer 1, and the enhancement layer 2.

In other words, in the layered encoding process, image quality corresponding to a referred bitstream layer is lower than image quality corresponding to a bitstream layer that refers to the referred layer.

It should be further noted that the image quality corresponding to the bitstream layer in this embodiment of this application may include at least one of resolution, picture quality, or a frame rate.

Optionally, before the receive end displays the first sub-image, the receive end may perform post-processing on the first sub-image to obtain a processed first sub-image, and display the processed first sub-image.

For example, the post-processing may include at least one of color format conversion, color tuning, refinement, or resampling.

It should be noted that the transmit end encodes the second sub-image after completing multi-layer encoding on the first sub-image.

Optionally, the transmit end and the receive end may determine coding orders of the second sub-image and the first sub-image and locations of the second sub-image and the first sub-image in the first frame of image in a plurality of manners. This is not limited in this embodiment of this application.

In a possible implementation, a method for dividing the plurality of sub-images of the frame of image and a coding order of each sub-image in the frame of image may be defined in a video coding protocol.

In another possible implementation, the transmit end and the receive end may agree in advance on a method for dividing the plurality of sub-images of the frame of image and a coding order of each sub-image in the frame of image.

In another possible implementation, the transmit end may send indication information to the receive end, where the indication information indicates a method for dividing the plurality of sub-images of the frame of image and a coding order of each sub-image in the frame of image. Correspondingly, the receive end may receive the indication information from the transmit end, and determine the method for dividing the plurality of sub-images of the frame of image and the coding order of each sub-image in the frame of image based on the indication information.

It should be noted that a processing process (including encoding, sending, decoding, and displaying) performed by the transmit end on the second sub-image is similar to a processing process of the first sub-image. For details, refer to the following description of the processing process of the first sub-image. To avoid repetition, details are not described herein again.

It should be noted that, to better reduce the video transmission delay, in this embodiment of this application, processing time of encoding, transmission, and decoding steps of the video data may be agreed on and controlled.

Optionally, that the transmit end sends the plurality of layers of bitstreams of the first sub-image to the receive end may include: The transmit end sends the bitstreams of the first sub-image layer by layer to the receive end within a first preset time interval. Correspondingly, the receive end receives the bitstreams of the first sub-image from the transmit end layer by layer within the first preset time interval.

In other words, the transmit end sends the bitstreams of the first sub-image layer by layer to the receive end from a start moment of the first preset time interval, and stops sending until an end moment of the first preset time interval. Correspondingly, the receive end receives the bitstreams of the first sub-image from the transmit end layer by layer from a start moment of the first preset time interval, and stops receiving until an end moment of the first preset time interval.

In a possible implementation, the transmit end may send the bitstreams of the first sub-image to the receive end layer by layer according to a coding order of the plurality of layers of bitstreams of the first sub-image.

In the layered encoding process, quality of an image corresponding to a bitstream obtained through encoding first is lower than quality of an image corresponding to a bitstream obtained through encoding later. However, because the quality of the image corresponding to the bitstream obtained through encoding first is lower, a transmission delay of the bitstream obtained through encoding first is lower than a transmission delay of the bitstream obtained through encoding later. Therefore, the bitstreams of the first sub-image are transmitted layer by layer according to the coding order. When a channel condition is unstable, this helps ensure that an acceptable display image with higher image quality is provided for a user as much as possible, thereby improving robustness to a channel change.

It should be noted that, during encoding, the plurality of layers of bitstreams of the first sub-image mutually refer to each other, and the transmit end sends the bitstreams of the first sub-image layer by layer according to the coding order of the plurality of layers of bitstreams of the first sub-image. Therefore, correspondingly the receive end needs to decode the bitstreams of the first sub-image layer by layer according to the coding order of the plurality of layers of bitstreams of the first sub-image.

Optionally, the receive end may determine the coding order of the plurality of layers of bitstreams of the first sub-image in a plurality of manners. This is not limited in this embodiment of this application.

In a possible implementation, if a transmission sequence of the bitstreams is not affected by a factor such as the channel condition, the receive end may use an order of receiving the plurality of layers of bitstreams of the first sub-image as the coding order. In other words, the receiving order is the coding order.

In another possible implementation, if a transmission sequence of the bitstreams is affected by a factor such as the channel condition, the transmit end may add, to each layer of bitstreams, indication information indicating a coding order of each layer of bitstreams. Correspondingly, when receiving each layer of bitstreams of the first sub-image, the receive end may determine a coding order of each layer of bitstreams based on the indication information carried in each layer of bitstreams.

Optionally, the transmit end may send the bitstreams of the first sub-image to the receive end in a plurality of manners according to the coding order of the plurality of layers of bitstreams of the first sub-image. This is not limited in this embodiment of this application.

In a possible implementation, after obtaining each layer of bitstreams of the first sub-image through encoding, the transmit end may directly send the layer of bitstream to the receive end, then continue to perform encoding to obtain a next layer of bitstream of the first sub-image, and then send the next layer of bitstream to the receive end, and so on.

In another possible implementation, after obtaining the plurality of layers of bitstreams of the first sub-image through sequential encoding, the transmit end may send the bitstreams of the first sub-image layer by layer to the receive end according to the coding order.

Correspondingly, the transmit end may send the bitstreams of the second sub-image layer by layer to the receive end within a second preset time interval, where the second preset time interval is adjacent to the first preset time interval and is later than the first preset time interval. Correspondingly, the receive end may receive, within the second preset time interval, the bitstreams of the second sub-image layer by layer from the transmit end.

To agree on and control the processing time of the encoding, transmission, and decoding steps of the video data, to achieve a low transmission delay of video transmission, an embodiment of this application provides a transmission pipeline structure. In the pipeline structure, each step performed by the transmit end and the receive end is agreed/limited to be completed within fixed and same processing time. That is, if actual processing time of a step exceeds fixed processing time allocated to the step, the step is stopped, and a next step is executed within fixed processing time allocated to the next step. In this way, the plurality of sub-images are sequentially processed by using the transmission pipeline structure. That is, when a sub-image is executed within fixed processing time allocated to a step, a next sub-image of the sub-image executes a previous step within fixed processing time allocated to the previous step of the step. In this manner, an end-to-end transmission delay of the video data can be strictly controlled, and a processing delay between sub-images can be reduced. In addition, according to the transmission pipeline structure provided in this embodiment of this application, image quality of one or more sub-images transmitted within a preset time interval is sacrificed, to ensure that the receive end can display a highly continuous and acceptable video image. In other words, after transmission through the unstable channel, acceptable or even high-quality display image quality can still be provided for the receive end, or when Wi-Fi bandwidth suddenly changes, a maximally continuous video image with acceptable image quality can still be provided for the receive end.

For example, a 1^{st} frame of image of the video data includes a sub-image 1, a sub-image 2, and a sub-image 3, T1 to T5 represent five adjacent time intervals sequentially arranged in a time sequence, and lengths of T1 to T5 are the same and are all equal to a preset length.

Sub-image 1: is encoded within T1, transmitted within T2, and decoded within T3.

Sub-image 2: is encoded within T2, transmitted within T3, and decoded within T4.

Sub-image 3: is encoded within T3, transmitted within T4, and decoded within T5.

Optionally, in this embodiment of this application, processing time for obtaining and displaying the video data may be further agreed on and controlled.

For example, a 1^{st} frame of image of the video data includes a sub-image 1, a sub-image 2, and a sub-image 3, T1 to T7 represent seven adjacent time intervals sequentially arranged in a time sequence, and lengths of T1 to T7 are the same and are all equal to a preset length.

Sub-image 1: is obtained within T1, encoded within T2, transmitted within T3, decoded within T4, and displayed within T5.

Sub-image 2: is obtained within T2, encoded within T3, transmitted within T4, decoded within T5, and displayed within T6.

Sub-image 3: is obtained within T3, encoded within T4, transmitted within T5, decoded within T6, and displayed within T7.

Processing duration of the obtaining, encoding, decoding, and displaying steps can be basically completed within a preset time interval by using an existing hardware design, software implementation, or the like. Therefore, an end-to-end transmission delay can be strictly controlled provided that a processing time of the transmission step is controlled.

The following describes in detail several solutions provided in embodiments of this application for completing the transmission step within the preset time interval.

Optionally, after the transmit end performs layered encoding on the first sub-image, that is, at an end moment of the first preset time interval, the plurality of layers of bitstreams of the first sub-image has the following three transmission results.

Transmission result 1: All the plurality of layers of bitstreams of the first sub-image are successfully transmitted.

Transmission result 2: At least one layer of bitstreams in the plurality of layers of bitstreams of the first sub-image is successfully transmitted.

Transmission result 3: All the plurality of layers of bitstreams of the first sub-image fail to be transmitted.

In the case of the transmission result 1, the plurality of layers of bitstreams of the first sub-image are all successfully transmitted within the first preset time interval, and the receive end may perform decoding based on the plurality of layers of bitstreams that are of the first sub-image and that are successfully transmitted, to obtain the first sub-image, and refresh and display the first sub-image in a display interface. Similarly, each time the receive end receives a plurality of layers of bitstreams of one sub-image, the receive end may decode the plurality of layers of bitstreams of the sub-image to obtain the sub-image, and refresh and display the sub-image in a display interface. This can ensure image quality and integrity of an image displayed by the receive end while reducing an end-to-end delay of presenting an image to a user.

It should be noted that the transmission result 2 and the transmission result 3 may be that some or all bitstreams of the first sub-image fail to be transmitted within the first preset time interval because channel bandwidth is unstable or the channel bandwidth is low. As a result, quality or continuity of an image displayed at the receive end may be poor.

In the case of the foregoing transmission result 2, the transmit end successfully sends at least one layer of bitstreams in the plurality of layers of bitstreams of the first sub-image within the first preset time interval, that is, a bitstream other than the at least one layer of bitstreams in the plurality of layers of bitstreams of the first sub-image fails to be sent. Correspondingly, the receive end successfully receives the at least one layer of bitstreams in the plurality of layers of bitstreams of the first sub-image within the first preset time interval, that is, a bitstream other than the at least one layer of bitstreams in the plurality of layers of bitstreams of the first sub-image fails to be received.

Optionally, the transmit end may process a target bitstream of the first sub-image within the first preset time interval in a plurality of manners. The target bitstream includes a bitstream that fails to be sent in the plurality of layers of bitstreams of the first sub-image, that is, the target bitstream includes a bitstream other than the at least one layer of bitstreams in the plurality of layers of bitstreams of the first sub-image.

In a possible implementation, the transmit end may directly discard the target bitstream, and send the plurality of layers of bitstreams of the second sub-image within the second preset time interval. Correspondingly, the receive end may decode only the at least one layer of bitstreams that are successfully received and that are of the first sub-image to obtain the first sub-image, without waiting for the target bitstream of the first sub-image, and continue to receive the plurality of layers of bitstreams of the second sub-image from the transmit end within the second time interval.

In this way, a transmission delay is reduced while image quality and smoothness of an image displayed at the receive end are ensured as much as possible, and the transmission delay can be strictly controlled and managed.

In another possible implementation, the transmit end may send the target bitstream of the first sub-image within a remaining time in another preset time interval, where the another preset time interval may be a preset time interval used to send another sub-image of the first frame of image, and the another sub-image is a sub-image that is encoded or sent after the first sub-image. In addition, when a plurality of layers of bitstreams of the another sub-image are all successfully sent, there is still remaining time in the another preset time interval.

In this way, it can be ensured that the plurality of layers of bitstreams of the first sub-image can be sent to the receive end, thereby providing reference for subsequent decoding of the another sub-image by the receive end.

In a possible implementation, if all the plurality of layers of bitstreams of the second sub-image are successfully sent within the second preset time interval, there is still remaining time in the second preset time interval, and the transmit end may, within the remaining time in the second preset time interval, send the target bitstream of the first sub-image to the receive end layer by layer.

It should be noted that, if a portion of the target bitstream of the first sub-image still fails to be sent within the remaining time in the second preset time interval, the transmit end may continue to send the portion of the target bitstream within a remaining time in a next preset time interval, and so on, until all the plurality of bitstreams of the first sub-image are successfully sent.

For example, a 1^{st} frame of image of the video data includes a sub-image 1, a sub-image 2, and a sub-image 3, T1 to T8 represent eight adjacent time intervals sequentially arranged in a time sequence, and lengths of T1 to T8 are the same and are all equal to a preset length.

Sub-image 1: The sub-image 1 is obtained within T1 and encoded within T2, at least one layer of bitstreams in a plurality of layers of bitstreams of the sub-image 1 is transmitted within T3, and the sub-image 1 is decoded within T4 and displayed within T5.

Sub-image 2: The sub-image 2 is obtained within T2 and encoded within T3, and transmitted within T4-1. Because there is a remaining time T4-2 in T4, some or all of remaining bitstreams of the sub-image 1 may be transmitted within T4-2. The sub-image 2 is decoded within T5 and displayed within T6.

Sub-image 3: is obtained within T3, encoded within T4, transmitted within T5, decoded within T6, and displayed within T7.

In the case of the transmission result 3, when the transmit end fails to transmit all the plurality of layers of bitstreams of the first sub-image within the first preset time interval, if the transmit end continues to transmit the plurality of layers of bitstreams of the second sub-image within a next preset time interval, when the receive end displays an image, an area in which the first sub-image is located may not be displayed, thereby affecting user experience. Therefore, in this case, the plurality of layers of bitstreams of the first sub-image should be retransmitted as soon as possible, and then the plurality of layers of bitstreams of the second sub-image continue to be transmitted, to ensure integrity and smoothness of an image displayed at the receive end while reducing a transmission delay as much as possible.

Optionally, the transmit end and the receive end may retransmit the plurality of layers of bitstreams of the first sub-image in a plurality of manners. This is not limited in this embodiment of this application.

In a possible implementation, the transmit end may re-send the bitstreams of the first sub-image layer by layer to the receive end within the second preset time interval, where the second preset time interval is adjacent to the first preset time interval and is later than the first preset time interval. Correspondingly, the receive end may re-receive, within the second preset time interval, the bitstreams of the first sub-image layer by layer from the transmit end.

Because retransmission of the plurality of layers of bitstreams of the first sub-image occupies the second preset time interval that is originally used to transmit the second sub-image, the transmit end may retransmit the plurality of layers of bitstreams of the first sub-image within the second preset time interval, and send the bitstreams of the second sub-image layer by layer to the receive end within a third preset time interval, where the third preset time interval is adjacent to the second preset time interval and is later than the second preset time interval. Correspondingly, the receive end receives, layer by layer within the third preset time interval, the bitstreams of the second sub-image from the transmit end.

For example, a 1^{st} frame of image of the video data includes a sub-image 1, a sub-image 2, and a sub-image 3, T1 to T8 represent eight adjacent time intervals sequentially arranged in a time sequence, and lengths of T1 to T8 are the same and are all equal to a preset length.

Sub-image 1: The sub-image is obtained within T1, encoded within T2, and initially transmitted within T3. If the transmission fails within T3, the sub-image 1 is retransmitted within T4, decoded within T5, and displayed within T6.

Sub-image 2: is obtained within T2, encoded within T3, transmitted within T5, decoded within T6, and displayed within T7.

Sub-image 3: is obtained within T3, encoded within T4, transmitted within T6, decoded within T7, and displayed within T8.

In another possible implementation, the transmit end may further re-send the plurality of layers of bitstreams of the first sub-image within a remaining time in another preset time interval, where the another preset time interval may be a preset time interval used to send another sub-image of the first frame of image, and the another sub-image is a sub-image that is encoded or sent after the first sub-image. In addition, when a plurality of layers of bitstreams of the another sub-image are all successfully sent, there is still remaining time in the another preset time interval.

For example, if all the plurality of layers of bitstreams of the second sub-image are successfully sent within the second preset time interval, there is still remaining time in the second preset time interval, and the transmit end may, within the remaining time in the second preset time interval, re-send the plurality of layers of bitstreams of the first sub-image to the receive end layer by layer.

Optionally, before the transmit end performs layered encoding on the first sub-image, the method may further include: The transmit end receives feedback information from the receive end, where the feedback information includes at least one of a first quantity, a second quantity, or first bandwidth, the first quantity indicates a quantity of layers of bitstreams that are received by the receive end and that are of a third sub-image, the second quantity indicates a quantity of layers of bitstreams that are successfully decoded by the receive end and that are of the third sub-image, the first bandwidth indicates bandwidth for transmitting the bitstreams of the third sub-image, and the bitstreams of the third sub-image are obtained by performing layered encoding on the third sub-image, where the plurality of sub-images include the third sub-image, and the receive end has completed decoding of the bitstreams of the third sub-image, or the third sub-image belongs to a second frame of image, and the second frame of image is located before the first frame of image in a frame sequence of a video.

It should be noted that the foregoing merely illustrates content included in the feedback information. Optionally, the feedback information may further include other information that can feed back a channel condition. This is not limited in this embodiment of this application.

In a possible implementation, the receive end may send the feedback information to the transmit end within a preset time interval used to display the first sub-image.

In another possible implementation, the transmission pipeline structure may further include a preset time interval used to send the feedback information, and the preset time interval used to send the feedback information may be between a preset time interval used for decoding and a preset time interval used for displaying.

Correspondingly, the transmit end may perform layered encoding on the first sub-image based on the feedback information, to obtain the plurality of layers of bitstreams of the first sub-image.

Specifically, the transmit end may determine an encoding parameter of the first sub-image based on the feedback information, and the encoding parameter includes at least one of a start Qp, a quantity of layers, a coding scheme, or a reference frame of the first sub-image, and the coding scheme may include intra-frame coding or inter-frame coding; and perform layered encoding on the first sub-image to obtain the plurality of layers of bitstreams of the first sub-image based on the encoding parameter.

In a possible implementation, the transmit end may obtain statistical information based on the feedback information, where the statistical information may include at least one of an average encoding bit rate of each layer of bitstreams in first duration (in a rolling time window), an average channel bandwidth in the first duration, or an instantaneous encoding bit rate or instantaneous channel bandwidth of each layer in the first duration; and determine an encoding parameter of the first sub-image based on the statistical information.

For example, when a ratio of the average channel bandwidth to the average encoding bit rate in the first duration is high, or a ratio of the instantaneous channel bandwidth to the instantaneous encoding bit rate is high, an encoding parameter used to improve image quality may be used; or when a ratio of the average channel bandwidth to the average encoding bit rate in the first duration is low, or a ratio of the instantaneous channel bandwidth to the instantaneous encoding bit rate is low, or a bitstream is continuously lost, an encoding parameter used to reduce a bit rate may be used.

Optionally, using the encoding parameter used to improve the image quality may include: increasing the start Qp, decreasing the quantity of layers, using inter-frame coding and intra-frame coding, and the like; and using the encoding parameter used to decrease the bit rate may include: decreasing the start Qp, increasing the quantity of layers, using only inter-frame coding, and the like.

For another example, when the bandwidth within the first duration is stable, the quantity of layers may be reduced; or when the bandwidth in the first duration fluctuates or changes greatly, the quantity of layers may be increased.

It should be noted that a smaller quantity of layers of the sub-image indicates a more complex coding scheme of each layer, and on the contrary, a larger quantity of layers of the sub-image indicates a simpler coding scheme of each layer. When the quantity of layers is small, inter-frame coding and intra-frame coding may be used. When the quantity of layers is large, only inter-frame coding may be used.

Optionally, the encoding parameter may further include an encoding tool, where the encoding tool may include at least one of a deblocking filter, a quantity of alternative modes for intra coding, or sample adaptive offset (sample adaptive offset, SAO).

It should be noted that a smaller quantity of layers indicates a more complex encoding tool used at each layer, and on the contrary, a larger quantity of layers indicates a simpler encoding tool used at each layer. For example, when the quantity of layers is small, the deblocking filter, and a larger quantity of alternative modes for intra-frame coding and sampling adaptive compensation (SAO) are used. When the quantity of layers is large, only a smaller quantity of alternative modes for intra-frame coding is used.

In an existing video transmission application, a transmission result of each frame of image/sub-image is not required to be fed back, but a possible image error is mainly recovered by periodically using an intra-coded frame. Because the intra-coded frame uses itself as a reference, a data amount may be increased by using the intra-coded frame, and therefore a bit rate is high.

However, in this embodiment of this application, a real-time fluctuation and change may exist due to the channel condition such as the bandwidth, and the channel condition directly affects the image transmission delay and image quality of the displayed image. In this embodiment of this application, the receive end feeds back a transmission result of each sub-image in a timely manner, so that the transmit end can dynamically adjust an encoding policy in a timely manner based on the feedback information, thereby achieving high video compression efficiency, reducing requirements on the bandwidth and transmission power consumption, finally improving quality of the displayed image, and avoiding an image transmission error. In addition, in this embodiment of this application, feedback is performed by using a feedback signal, so that the use of intra-coded frames can be reduced, thereby reducing the bit rate.

According to a second aspect, an embodiment of this application further provides a video transmission method. The method includes: obtaining a first frame of image of video data, where the first frame of image includes a plurality of sub-images, and the plurality sub-images include a first sub-image and a second sub-image; performing layered encoding on the first sub-image to obtain a plurality of layers of bitstreams of the first sub-image; sending the plurality of layers of bitstreams of the first sub-image to a receive end; after completing layered encoding on the first sub-image, performing layered encoding on the second sub-image to obtain a plurality of layers of bitstreams of the second sub-image; and sending the plurality of layers of bitstreams of the second sub-image to the receive end.

It should be noted that the method may be applied to a video transmission system in any one of the first aspect or the possible implementations of the first aspect, and is performed by a transmit end in the video transmission system.

It should be further noted that the method may include the steps performed by the transmit end in any one of the first aspect or the possible implementations of the first aspect.

Optionally, the method may be applied to a short-range wireless projection scenario. Short-range wireless projection is a technology in which video data generated by a mobile terminal with a strong processing capability is encoded and compressed, and wirelessly sent to a device with a weak processing capability but good display effect for display.

For example, the transmit end is a mobile phone, and the receive end is VR glasses. The mobile phone may project a rendered game image to a display interface of the VR glasses.

For another example, the transmit end is a notebook computer, and the receive end is a television set. The notebook computer may project a television picture to a display interface of the television set.

In a possible implementation, the sending the plurality of layers of bitstreams of the first sub-image to a receive end includes: sending the bitstreams of the first sub-image layer by layer to the receive end within a first preset time interval.

In a possible implementation, the sending the bitstreams of the first sub-image layer by layer to the receive end within a first preset time interval includes: sending the bitstreams of the first sub-image layer by layer to the receive end within the first preset time interval according to a coding order of the plurality of layers of bitstreams of the first sub-image.

In a possible implementation, when all the plurality of layers of bitstreams of the first sub-image fail to be sent within the first preset time interval, the method further includes: sending the bitstreams of the first sub-image layer by layer to the receive end within a second preset time interval, where the second preset time interval is adjacent to the first preset time interval and is later than the first preset time interval.

In a possible implementation, at least one layer of bitstreams in the plurality of layers of bitstreams of the first sub-image is successfully sent within the first preset time interval, and the method further includes: discarding a bitstream other than the at least one layer of bitstreams in the plurality of layers of bitstreams of the first sub-image.

In a possible implementation, the sending the plurality of layers of bitstreams of the second sub-image to the receive end includes: sending the bitstreams of the second sub-image layer by layer to the receive end within a second preset time interval, where the second preset time interval is adjacent to the first preset time interval and is later than the first preset time interval.

In a possible implementation, when all the plurality of layers of bitstreams of the first sub-image fail to be sent within the first preset time interval and all the plurality of layers of bitstreams of the second sub-image are successfully sent within the second preset time interval, there is still remaining time in the second preset time interval, and the method further includes:
sending the bitstreams of the first sub-image layer by layer to the receive end within the remaining time in the second preset time interval.

In a possible implementation, when at least one layer of bitstreams in the plurality of layers of bitstreams of the first sub-image is successfully sent within the first preset time interval and all the plurality of layers of bitstreams of the second sub-image are successfully sent, there is still remaining time in the second preset time interval, and the method further includes: sending, layer by layer, a bitstream other than at least one layer of bitstreams in the plurality of layers of bitstreams of the first sub-image to the receive end within the remaining time in the second preset time interval.

In a possible implementation, before the performing layered encoding on the first sub-image to obtain a plurality of layers of bitstreams of the first sub-image, the method further includes: receiving feedback information from the receive end, where the feedback information includes at least one of a first quantity, a second quantity, or first bandwidth, the first quantity indicates a quantity of layers of bitstreams that are received by the receive end and that are of a third sub-image, the second quantity indicates a quantity of layers of bitstreams that are successfully decoded by the receive end and that are of the third sub-image, the first bandwidth indicates bandwidth for transmitting the bitstreams of the third sub-image, and the bitstreams of the third sub-image are obtained by performing layered encoding on the third sub-image, where the plurality of sub-images include the third sub-image, and the receive end has completed decoding of the bitstreams of the third sub-image, or the third sub-image belongs to a second frame of image, and the second frame of image is located before the first frame of image in a frame sequence of a video; and the performing layered encoding on the first sub-image to obtain a plurality of layers of bitstreams of the first sub-image includes: performing layered encoding on the first sub-image to obtain the plurality of layers of bitstreams of the first sub-image based on the feedback information.

In a possible implementation, the performing layered encoding on the first sub-image to obtain the plurality of layers of bitstreams of the first sub-image based on the feedback information includes: determining an encoding parameter of the first sub-image based on the feedback information, where the encoding parameter includes at least one of a start Qp, a quantity of layers, a coding scheme, or a reference frame of the first sub-image; and performing layered encoding on the first sub-image to obtain the plurality of layers of bitstreams of the first sub-image based on the encoding parameter.

In a possible implementation, a sub-image is a slice (slice), a tile (tile), a block (block), a macroblock (MB), or a largest coding block (LCU) of a frame of image.

According to a third aspect, an embodiment of this application further provides another video transmission method. The method includes: receiving a plurality of layers of bitstreams of a first sub-image of a first frame of image from a transmit end; decoding the plurality of layers of bitstreams of the first sub-image to obtain the first sub-image; displaying the first sub-image; receiving a plurality of layers of bitstreams of a second sub-image of the first frame of image from the transmit end; decoding the plurality of layers of bitstreams of the second sub-image to obtain the second sub-image; and displaying the second sub-image.

It should be noted that the method may be applied to a video transmission system in any one of the first aspect or the possible implementations of the first aspect, and is performed by a receive end in the video transmission system.

It should be further noted that the method may include the steps performed by the receive end in any one of the first aspect or the possible implementations of the first aspect.

Optionally, the method may be applied to a short-range wireless projection scenario. Short-range wireless projection is a technology in which video data generated by a mobile terminal with a strong processing capability is encoded and compressed, and wirelessly sent to a device with a weak processing capability but good display effect for display.

For example, the transmit end is a mobile phone, and the receive end is VR glasses. The mobile phone may project a rendered game image to a display interface of the VR glasses.

For another example, the transmit end is a notebook computer, and the receive end is a television set. The notebook computer may project a television picture to a display interface of the television set.

In a possible implementation, the decoding the plurality of layers of bitstreams of the first sub-image to obtain the first sub-image includes: decoding the bitstreams of the first sub-image layer by layer according to a coding order of the plurality of layers of bitstreams of the first sub-image, to obtain the first sub-image.

In a possible implementation, the receiving a plurality of layers of bitstreams of a first sub-image of a first frame of image from a transmit end includes: receiving, within a first preset time interval, the bitstreams of the first sub-image from the transmit end layer by layer.

In a possible implementation, when all the plurality of layers of bitstreams of the first sub-image fail to be received within the first preset time interval, the method further includes: receiving the bitstreams of the first sub-image layer by layer from the transmit end within a second preset time interval, where the second preset time interval is adjacent to the first preset time interval and is later than the first preset time interval.

In a possible implementation, the receiving a plurality of layers of bitstreams of a second sub-image of the first frame of image from the transmit end includes: receiving the bitstreams of the second sub-image layer by layer from the transmit end within a second preset time interval, where the second preset time interval is adjacent to the first preset time interval and is later than the first preset time interval.

In a possible implementation, when all the plurality of layers of bitstreams of the first sub-image fail to be received within the first preset time interval and all the plurality of layers of bitstreams of the second sub-image are successfully received within the second preset time interval, there is still remaining time in the second preset time interval, and the method further includes: receiving the bitstreams of the first sub-image layer by layer from the transmit end within the remaining time in the second preset time interval.

In a possible implementation, when at least one layer of bitstreams in the plurality of layers of bitstreams of the first sub-image is successfully received within the first preset time interval and all the plurality of layers of bitstreams of the second sub-image are successfully received, there is still remaining time in the second preset time interval, and the method further includes: receiving, layer by layer, a target bitstream from the transmit end within the remaining time in the second preset time interval, where the target bitstream includes a bitstream other than the at least one layer of bitstreams in the plurality of layers of bitstreams of the first sub-image.

In a possible implementation, the method further includes: sending feedback information to the transmit end, where the feedback information includes at least one of a first quantity, a second quantity, or first bandwidth, the first quantity indicates a quantity of layers of received bitstreams of the first sub-image, the second quantity indicates a quantity of layers of successfully decoded bitstreams of the first sub-image, and the first bandwidth indicates bandwidth for transmitting the bitstreams of the first sub-image.

In a possible implementation, a sub-image is a slice (slice), a tile (tile), a block (block), a macroblock (MB), or a largest coding block (LCU) of a frame of image.

According to a fourth aspect, an embodiment of this application further provides a video transmission apparatus. The apparatus is configured to perform the method in any one of the second aspect or the possible implementations of the second aspect, and the apparatus includes units configured to perform the method in any one of the second aspect or the possible implementations of the second aspect.

According to a fifth aspect, an embodiment of this application further provides a video transmission apparatus. The apparatus is configured to perform the method in any one of the third aspect or the possible implementations of the third aspect, and the apparatus includes units configured to perform the method in any one of the third aspect or the possible implementations of the third aspect.

According to a sixth aspect, an embodiment of this application further provides a video transmission apparatus. The apparatus includes a processor and a communication interface. The processor and the communication interface communicate with each other through an internal connection path, the processor is configured to invoke instructions from the communication interface and run the instructions, and when executing the instructions, the processor implements the method according to any one of the second aspect or the possible implementations of the second aspect.

Optionally, the video transmission apparatus may further include a memory, and the memory is configured to store the foregoing instructions.

In a possible implementation, the video transmission apparatus is a terminal.

According to a seventh aspect, an embodiment of this application further provides a video transmission apparatus. The apparatus includes a processor and a communication interface. The processor and the communication interface communicate with each other through an internal connection path, the processor is configured to invoke instructions from the communication interface and run the instructions, and when executing the instructions, the processor implements the method according to any one of the third aspect or the possible implementations of the third aspect.

Optionally, the video transmission apparatus may further include a memory, and the memory is configured to store the foregoing instructions.

In a possible implementation, the video transmission apparatus is a terminal.

According to an eighth aspect, an embodiment of this application further provides a terminal. The terminal includes the video transmission apparatus provided in the sixth aspect and/or the video transmission apparatus provided in the seventh aspect.

According to a ninth aspect, an embodiment of this application further provides a computer-readable storage medium, configured to store a computer program. The computer program includes instructions used to implement the method in any one of the second aspect or the possible implementations of the second aspect.

According to a tenth aspect, an embodiment of this application further provides a computer-readable storage medium, configured to store a computer program. The computer program includes instructions used to implement the method in any one of the third aspect or the possible implementations of the third aspect.

According to an eleventh aspect, an embodiment of this application further provides a computer program product, where the computer program product includes instructions, and when the instructions run on a computer, the computer implements the method in the second aspect or any possible implementation of the second aspect.

According to a twelfth aspect, an embodiment of this application further provides a computer program product, where the computer program product includes instructions, and when the instructions run on a computer, the computer implements the method in the third aspect or any possible implementation of the third aspect.

### BRIEF DESCRIPTION OF DRAWINGS

FIG. 1 is a schematic block diagram of a video transmission system 100 according to an embodiment of this application;
FIG. 2 is a schematic diagram of existing scalable coding;
FIG. 3 is a schematic block diagram of a video transmission method 200 according to an embodiment of this application;
FIG. 4 is a schematic diagram of a transmission pipeline structure according to an embodiment of this application;
FIG. 5 is a schematic diagram of another transmission pipeline structure according to an embodiment of this application;
FIG. 6 is a schematic diagram of still another transmission pipeline structure according to an embodiment of this application;
FIG. 7 is a schematic diagram of still another transmission pipeline structure according to an embodiment of this application;
FIG. 8 is a schematic block diagram of a video transmission apparatus 300 according to an embodiment of this application;
FIG. 9 is a schematic block diagram of another video transmission apparatus 400 according to an embodiment of this application;
FIG. 10 is a schematic block diagram of another video transmission system 500 according to an embodiment of this application; and
FIG. 11 is a schematic block diagram of a chip 600 according to an embodiment of this application.

### DESCRIPTION OF EMBODIMENTS

The following describes embodiments of this application with reference to the accompanying drawings in embodiments of this application.

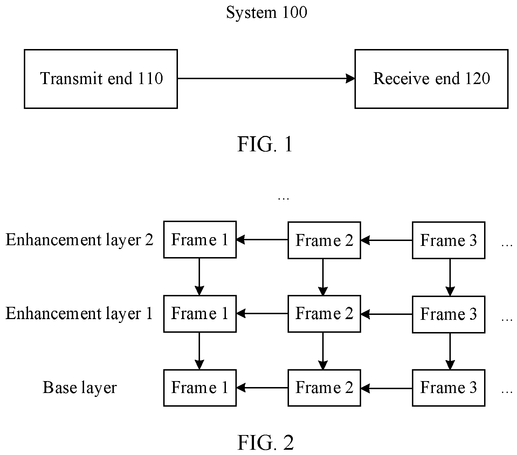

FIG. 1 is a schematic diagram of a video transmission system 100 according to an embodiment of this application. As shown in FIG. 1, the system 100 includes a transmit end 110 and a receive end 120.

The transmit end 110 is configured to: obtain video data, encode the video data to obtain encoded video data, and send the encoded video data to the receive end 120.

The receive end 120 is configured to receive the encoded video data from the transmit end 110, decode the encoded video data to obtain a video image, and display the video image in a display interface.

It should be noted that in the field of video coding, the terms "picture (picture)", "frame (frame)", or "image (image)" may be used as synonyms. Video encoding is performed on a transmit end, and usually includes processing (for example, by compressing) an original video picture to reduce an amount of data for representing the video picture, for more efficient storage and/or transmission. Video decoding is performed on the receive end, and usually includes inverse processing relative to an encoder, to reconstruct video pictures.

In a possible implementation, the transmit end or the receive end may include a terminal.

It should be noted that the terminal in this embodiment of this application may be a device that provides video/data connectivity for a user, for example, a notebook or laptop computer, a mobile phone, a smartphone, a pad or a tablet computer, a wearable device, a video camera, a desktop computer, a set-top box, a television set, a camera, a vehicle-mounted device, a display, a digital media player, a video game console, a video streaming transmission device (such as a content service server or a content distribution server), an in-vehicle computer, a wireless communication device, and the like, and may not use or may use any type of operating system.

It should be further noted that, when the terminal device is a wearable device, the wearable device may alternatively be a generic term for wearable devices such as glasses, gloves, watches, clothes, and shoes that are developed based on intelligent design of daily wearing by using wearable technologies. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-size devices that can implement complete or partial functions without depending on smartphones, such as smart watches or smart glasses, and devices that are dedicated to only one type of application function and need to work with other devices such as smartphones, such as various smart bands or smart jewelry for monitoring physical signs.

Optionally, the video data may be transmitted between the transmit end and the receive end in a plurality of manners. This is not limited in this embodiment of this application.

In a possible implementation, the video data may be transmitted between the transmit end and the receive end in a wired manner.

It should be noted that the foregoing wired manner may be implemented through a data cable connection or an internal bus connection.

In another possible implementation, the video data may be wirelessly transmitted between the transmit end and the receive end.

It should be noted that the foregoing wireless transmission may be implemented through a communication network. The communication network may be a local area network, or may be a wide area network transferred by using a relay (relay) device, or may include a local area network and a wide area network. For example, when the communication network is a local area network, the communication network may be a Wi-Fi hotspot network, a Wi-Fi P2P network, a Bluetooth network, a ZigBee network, a near field communication (near field communication, NFC) network, or a possible future universal short-range communication network. For example, when the communication network is a wide area network, the communication network may be a third generation mobile communications technology (3rd generation mobile communications technology, 3G) network, a fourth generation mobile communications technology (4th generation mobile communications technology, 4G) network, a fifth generation mobile communications technology (5th generation mobile communications technology, 5G) network, a future evolved public land mobile network (public land mobile network, PLMN), or the internet. This is not limited in this embodiment of this application.

In a possible implementation, the system 100 may be applied to a short-range wireless projection scenario. Short-range wireless projection is a technology in which video data generated by a mobile terminal with a strong processing capability is encoded and compressed, and wirelessly sent to a device with a weak processing capability but good display effect for display.

For example, the transmit end is a mobile phone, and the receive end is VR glasses. The mobile phone may project a rendered game image to a display interface of the VR glasses.

For another example, the transmit end is a notebook computer, and the receive end is a television set. The notebook computer may project a television picture to a display interface of the television set.

In the foregoing application scenario, because the video data is exchanged between the transmit end and the receive end, a transmission delay is an important factor that affects system performance. In addition, a wireless channel is easily affected by a plurality of factors in a use environment such as noise and an interference signal. As a result, transmission bandwidth is unstable, causing data loss and further occurring an image quality problem. Therefore, anti-interference is another important factor that affects the system performance.

To resolve the foregoing problem, in the conventional technology, the video data is encoded and decoded by using a scalable video coding protocol. Scalable video coding is intuitively reflected in a bit rate. Layered encoding and selective transmission of the video data are main means to implement scalability.

So-called layered encoding is to perform division in terms of time, space, and quality, and output a plurality of layers of bitstreams that mutually refer to each other. The plurality of layers of bitstreams may include a basic layer and at least one enhancement layer. Data of the base layer may enable a decoder to completely and normally decode basic video content, but image quality of a video image obtained based on the data of the base layer is low. When a channel is limited or a channel environment is complex, it can be ensured that the decoder can receive a smooth video image that can be watched. When the channel environment is good or channel resources are abundant, data of the enhancement layer can be transferred to improve the image quality. The image quality may be evaluated and measured in terms of resolution, a picture quality, a frame rate, and the like.

It should be noted that, in an existing video transmission method, the transmit end performs layered encoding on a frame of image based on the H.264 scalable video coding (scalable video coding, SVC) protocol or the H.265 scalable video coding (scalable high-efficiency video coding, SHVC) protocol, to obtain a plurality of layers of bitstreams that mutually refer to each other. For example, the transmit end performs multi-layer encoding on a first frame of image in the video data. FIG. 2 shows a flowchart of performing layered encoding by using the existing SVC/SHVC protocol standard. As shown in FIG. 2, when performing layered encoding on the first frame of image (that is, a frame 1 in FIG. 2), the transmit end first performs encoding to obtain a bitstream of a base layer of the first frame of image, obtains a bitstream of an enhancement layer 1 by referring to the bitstream of the base layer, and then obtain a bitstream of an enhancement layer 2 by referring to the bitstream of the enhancement layer 1. Reference relationships between the basic layer, the enhancement layer 1, and the enhancement layer 2 are shown by arrows in FIG. 2. Encoded video data pointed to by a tail of an arrow is obtained by referring to encoded video data pointed to by a head of the arrow. After obtaining three layers of bitstreams of the first frame of image, the transmit end sends the three layers of bitstreams of the first frame of image to the receive end layer by layer, and continues to perform layered encoding on a next frame of image (that is, a frame 2 in FIG. 2).

In a possible implementation, in an existing video transmission method, when performing layered encoding on the first frame of image, the transmit end may divide the first frame of image into a plurality of sub-images; encode each sub-image in the plurality of sub-images to obtain a sub-bitstream of a base layer corresponding to each sub-image, so as to obtain a bitstream of the base layer of the first frame of image, where the bitstream of the base layer includes a sub-bitstream of the base layer corresponding to each sub-image in the plurality of sub-images; and then perform encoding based on the sub-bitstream of the base layer corresponding to each sub-image to obtain a sub-bitstream of an enhancement layer 1 corresponding to each sub-image, so as to obtain a bitstream of the enhancement layer 1 of the first frame of image, and ay analogy, to obtain a bitstream of an enhancement layer 2 of the first frame of image.

Correspondingly, after successfully receiving the foregoing three layers of bitstreams of the first frame of image, the receive end performs decoding based on the three layers of bitstreams to obtain the first frame of image, and displays the first frame of image. Therefore, a transmission delay is large.

It should be further noted that, during layered encoding, image quality corresponding to a referred bitstream layer is lower than image quality corresponding to a bitstream layer that refers to the referred bitstream layer. In other words, according to a coding order, image quality corresponding to the plurality of layers of bitstreams of the image increases in ascending order, that is, image quality of the base layer is lower than image quality of the enhancement layer 1, and image quality of the enhancement layer 1 is lower than image quality of the enhancement layer 2.

It should be further noted that image quality of the plurality of layers of bitstream pairs obtained by the transmit end through encoding is different, and correspondingly, image quality of an image that can be reconstructed by the receive end based on each layer of bitstreams is different. Therefore, if the receive end wants to reconstruct an image with high image quality, the receive end needs to combine more layers of bitstreams.

It should be noted that FIG. 2 shows only an example in which the video data includes three frames of images, and three layers of bitstreams are obtained after each frame of image is encoded. Optionally, the video data may further include another quantity of frames of images, and another quantity of plurality of layers of bitstreams may be further obtained by performing layered encoding on each frame of image. This is not limited in this embodiment of this application.

It should be further noted that FIG. 2 shows only an example of a reference relationship of the encoded video data in the layered encoding process. Optionally, the encoded video data may further have another reference relationship in the layered encoding process. This is not limited in this embodiment of this application.

It should be noted that the sub-image described in this embodiment of this application may be understood as a granularity, for example, a minimum granularity, for encoding the video data by the transmit end or decoding the video data by the receive end.

Optionally, the sub-image may be but is not limited to a slice (slice), a tile (tile), a block (block), a macro block (macro block, MB), or a largest coding block (largest coding unit, LCU) of the frame of image. This is not limited in this embodiment of this application.

For example, the first frame of image of the video data shown in FIG. 2 is divided into three sub-images. A coding order for performing layered encoding on the video data by the transmit end by using the existing SVC/SHVC protocol may be shown in Table 1. After completing layered encoding, the transmit end may send the first frame of image to the receive end layer by layer according to a coding order.

**Table 1**

| Time unit | Coding order of existing SVC/SHVC |
|---|---|
| 1 | Frame (1) sub-image (0) bitstream layer (0) |
| 2 | Frame (1) sub-image (1) bitstream layer (0) |
| 3 | Frame (1) sub-image (2) bitstream layer (0) |
| 4 | Frame (1) sub-image (0) bitstream layer (1) |
| 5 | Frame (1) sub-image (1) bitstream layer (1) |
| 6 | Frame (1) sub-image (2) bitstream layer (1) |
| 7 | Frame (1) sub-image (0) bitstream layer (2) |
| 8 | Frame (1) sub-image (1) bitstream layer (2) |
| 9 | Frame (1) sub-image (2) bitstream layer (2) |

However, in the foregoing video encoding method and sending method, if the receive end wants to reconstruct a first frame of image with high image quality, the receive end needs to perform decoding by referring to a plurality of layers of bitstreams of the first frame of image (that is, three layers of bitstreams of the first frame of image), that is, the frame of image can be displayed only after all the plurality of layers of bitstreams of the frame of image are successfully received or a transmission time specified in a communications protocol expires. Therefore, a transmission delay is large.

An embodiment of this application provides a video transmission method, to reduce an end-to-end transmission delay of video data, and in particular, to reduce a delay from obtaining the video data by a transmit end to displaying the video data by a receive end to a user, and improve robustness to a channel change.

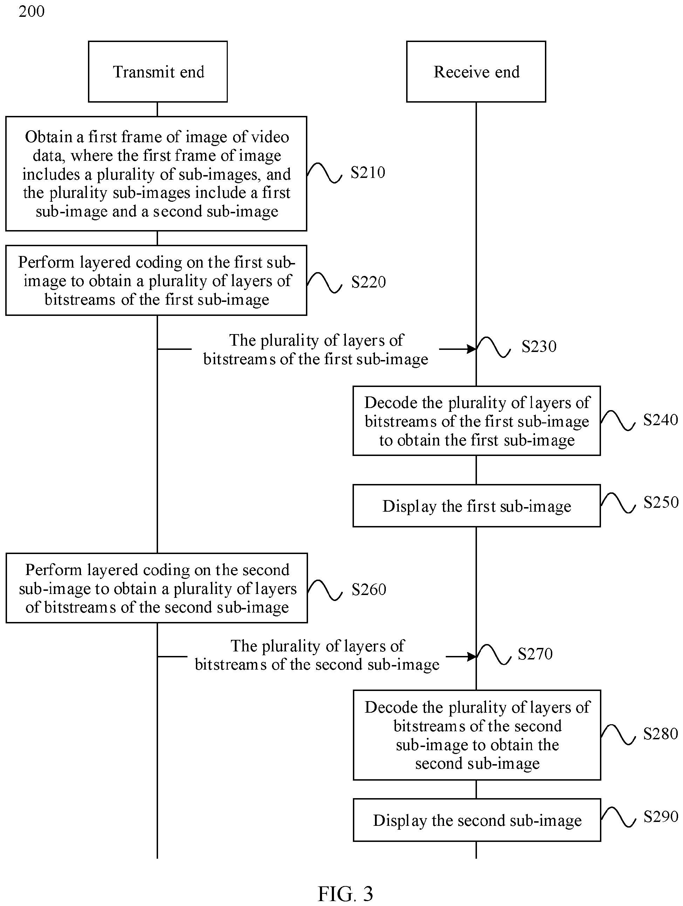

FIG. 3 is a schematic block diagram of a video transmission method 200 according to an embodiment of this application. The method 200 may be applied to the video transmission system 100 shown in FIG. 1, and may be applied to a short-range wireless projection scenario.

S210: A transmit end obtains a first frame of image of video data, where the first frame of image includes a plurality of sub-images, and the plurality sub-images include a first sub-image and a second sub-image.

It should be noted that the video data may include a plurality of frames of images arranged according to a frame sequence, and the plurality of frames of images include the first frame of image and the second frame of image.

Optionally, the transmit end may obtain the video data in a plurality of manners. This is not limited in this embodiment of this application.

In a possible implementation, the transmit end may receive the video data from a first apparatus.

For example, the first apparatus may be a photographing apparatus, and the transmit end may receive the video data collected by the photographing apparatus.

For another example, the first apparatus may be a video processing apparatus, and the transmit end may receive the video data obtained through processing by the video processing apparatus.

For another example, the first apparatus may be a video headend, and the transmit end may receive the video data generated by the video headend.

In another possible implementation, the transmit end may generate the video data by itself.

For example, when the transmit end includes a photographing apparatus, and the transmit end may obtain the video data collected by the photographing apparatus.

For another example, when the transmit end is a video headend, the transmit end may generate the video data.

For another example, when the transmit end includes a video processing module, the transmit end may obtain the video data obtained by processing by the video processing module.

In still another possible implementation, the transmit end may obtain raw video data, and preprocess the raw video data to obtain a processed video data.

For example, the preprocessing may include at least one of refinement, color format conversion, color tuning, or denoising.

S220: The transmit end performs layered encoding on the first sub-image to obtain a plurality of layers of bitstreams of the first sub-image.

Optionally, before S220, the transmit end may divide the first frame of image into the plurality of sub-images.

It should be noted that the sub-image described in this embodiment of this application may be understood as a granularity, for example, a minimum granularity, for encoding the video data by the transmit end or decoding the video data by the receive end.

Optionally, a sub-image may be but is not limited to a slice, a tile, a block, an MB, or an LCU of a frame of image. This is not limited in this embodiment of this application.

It should be noted that, according to the video transmission method provided in this embodiment of this application, a smaller encoding granularity selected when the transmit end performs layered encoding on the frame of image indicates a smaller corresponding encoding delay.

For example, when the transmit end performs layered encoding on the frame of image by using a block, an MB, or an LCU as an encoding granularity, a lower encoding delay can be implemented.

For another example, when the transmit end performs layered encoding on the frame of image by using a slice or a tile as an encoding granularity, the transmit end can be compatible with existing SVC and SHVC standards.

Optionally, the transmit end may perform layered encoding on the first sub-image based on a plurality of video coding protocols. This is not limited in this embodiment of this application.

In a possible implementation, the transmit end may perform layered encoding on the first sub-image based on the H.264 scalable video coding (scalable video coding, SVC) protocol or the H.265 scalable video coding (scalable high-efficiency video coding, SHVC) protocol.

In another possible implementation, the transmit end may perform layered encoding on the first sub-image based on a future scalable video coding protocol, for example, the H.266 scalable video coding protocol.

It should be noted that there are different reference relationships between the plurality of layers of bitstreams of the first sub-image. Reference relationships shown in FIG. 2 are used an example. The transmit end first performs encoding to obtain a base layer of the first sub-image, performs encoding by referring to the base layer to obtain an enhancement layer 1, and then performs encoding by referring to the enhancement layer 1 to obtain an enhancement layer 2.

It should be further noted that, in a process of performing layered encoding, image quality corresponding to a referred bitstream layer is lower than image quality corresponding to a bitstream layer that refers to the referred layer. In other words, according to a coding order, image quality (or bit rates) corresponding to the plurality of layers of bitstreams increases sequentially.

It should be further noted that the image quality corresponding to the bitstream layer in this embodiment of this application may include at least one of resolution, picture quality, or a frame rate.

For example, the image quality includes the resolution. Higher resolution indicates higher image quality.

For another example, the image quality includes the resolution and the picture quality. When resolution is the same, better picture quality indicates higher image quality.

S230: The transmit end sends the plurality of layers of bitstreams of the first sub-image to the receive end; and correspondingly, the receive end receives the plurality of layers of bitstreams of the first sub-image from the transmit end.

S240: The receive end decodes the plurality of layers of bitstreams of the first sub-image to obtain the first sub-image.

S250: The receive end displays the first sub-image.

Optionally, before S250, the receive end may perform post-processing on the first sub-image to obtain a processed first sub-image, and display the processed first sub-image.

For example, the post-processing may include at least one of color format conversion, color tuning, refinement, or resampling.

S260: The transmit end performs layered encoding on the second sub-image to obtain a plurality of layers of bitstreams of the second sub-image.

It should be noted that S260 is performed after S220, that is, the transmit end encodes the second sub-image after completing multi-layer encoding of the first sub-image.

Optionally, the transmit end and the receive end may determine coding orders of the second sub-image and the first sub-image and locations of the second sub-image and the first sub-image in the first frame of image in a plurality of manners. This is not limited in this embodiment of this application.

In a possible implementation, a method for dividing the plurality of sub-images of the frame of image and a coding order of each sub-image in the frame of image may be defined in a video coding protocol.

In another possible implementation, the transmit end and the receive end may agree in advance on a method for dividing the plurality of sub-images of the frame of image and a coding order of each sub-image in the frame of image.

In still another possible implementation, the transmit end may send indication information to the receive end, where the indication information indicates a method for dividing the plurality of sub-images of the frame of image and a coding order of each sub-image in the frame of image. Correspondingly, the receive end may receive the indication information from the transmit end, and determine the method for dividing the plurality of sub-images of the frame of image and the coding order of each sub-image in the frame of image based on the indication information.

For example, the transmit end may add the indication information to control information of a bitstream of a sub-image.

S270: The transmit end sends the plurality of layers of bitstreams of the second sub-image to the receive end; and correspondingly, the receive end receives the plurality of layers of bitstreams of the second sub-image from the transmit end.

S280: The receive end decodes the plurality of layers of bitstreams of the second sub-image to obtain the second sub-image.

S290: The receive end displays the second sub-image.

Optionally, before S290, the receive end may perform post-processing on the second sub-image to obtain a processed second sub-image, and display the processed second sub-image.

It should be noted that S220 to S250 are a processing process of the first sub-image, and S260 to S290 are a processing process of the second sub-image. The processing process of the second sub-image is similar to the processing process of the first sub-image. For details, refer to the following description of the processing process of the first sub-image. To avoid repetition, details are not described herein again.

It should be noted that, to better reduce the video transmission delay, in this embodiment of this application, processing time of encoding, transmission, and decoding steps of the video data may be agreed on and controlled.

Optionally, S230 may include: The transmit end may send the bitstreams of the first sub-image layer by layer to the receive end within a first preset time interval. Correspondingly, the receive end receives the bitstreams of the first sub-image from the transmit end layer by layer within the first preset time interval.

In other words, the transmit end sends the bitstreams of the first sub-image layer by layer to the receive end from a start moment of the first preset time interval, and stops sending until an end moment of the first preset time interval. Correspondingly, the receive end receives the bitstreams of the first sub-image from the transmit end layer by layer from a start moment of the first preset time interval, and stops receiving until an end moment of the first preset time interval.

In a possible implementation, the transmit end may send the bitstreams of the first sub-image to the receive end layer by layer according to a coding order of the plurality of layers of bitstreams of the first sub-image.

In the layered encoding process, quality of an image corresponding to a bitstream obtained through encoding first is lower than quality of an image corresponding to a bitstream obtained through encoding later. However, because the quality of the image of the bitstream obtained through encoding first is lower, a transmission delay of the bitstream obtained through encoding first is lower than a transmission delay of the bitstream obtained through encoding later. Therefore, the bitstreams of the first sub-image are transmitted layer by layer according to the coding order. When a channel condition is unstable, this helps ensure that an acceptable display image with higher image quality is provided for a user as much as possible, thereby improving robustness to a channel change.

It should be noted that, during encoding, the plurality of layers of bitstreams of the first sub-image mutually refer to each other, and the transmit end sends the bitstreams of the first sub-image layer by layer according to the coding order of the plurality of layers of bitstreams of the first sub-image. Therefore, in S240, the receive end needs to decode the bitstreams of the first sub-image layer by layer according to the coding order of the plurality of layers of bitstreams of the first sub-image.

Optionally, the receive end may determine the coding order of the plurality of layers of bitstreams of the first sub-image in a plurality of manners. This is not limited in this embodiment of this application.

In a possible implementation, if a transmission sequence of the bitstreams is not affected by a factor such as the channel condition, the receive end may use an order of receiving the plurality of layers of bitstreams of the first sub-image as the coding order. In other words, the receiving order is the coding order.

In another possible implementation, if a transmission sequence of the bitstreams is affected by a factor such as the channel condition, the transmit end may add, to each layer of bitstreams, indication information indicating a coding order of each layer of bitstreams. Correspondingly, when receiving each layer of bitstreams of the first sub-image, the receive end may determine a coding order of each layer of bitstreams based on the indication information carried in each layer of bitstreams.

Optionally, the transmit end may send the bitstreams of the first sub-image to the receive end in a plurality of manners according to the coding order of the plurality of layers of bitstreams of the first sub-image. This is not limited in this embodiment of this application.

In a possible implementation, after obtaining each layer of bitstreams of the first sub-image through encoding, the transmit end may directly send the layer of bitstream to the receive end, then continue to perform encoding to obtain a next layer of bitstream of the first sub-image, and then send the next layer of bitstream to the receive end, and so on.

In another possible implementation, after obtaining the plurality of layers of bitstreams of the first sub-image through sequential encoding, the transmit end may send the bitstreams of the first sub-image layer by layer to the receive end according to the coding order.

Correspondingly, S270 may include: The transmit end may send the bitstreams of the second sub-image layer by layer to the receive end within a second preset time interval, where the second preset time interval is adjacent to the first preset time interval and is later than the first preset time interval. Correspondingly, the receive end may receive, within the second preset time interval, the bitstreams of the second sub-image layer by layer from the transmit end.

To agree on and control the processing time of the encoding, transmission, and decoding steps of the video data, to achieve a low transmission delay of video transmission, an embodiment of this application provides a transmission pipeline structure. In the pipeline structure, each step performed by the transmit end and the receive end is agreed/limited to be completed within fixed and same processing time. That is, if actual processing time of a step exceeds fixed processing time allocated to the step, the step is stopped, and a next step is executed within fixed processing time allocated to the next step. In this way, the plurality of sub-images are sequentially processed by using the transmission pipeline structure. That is, when a sub-image is executed within fixed processing time allocated to a step, a next sub-image of the sub-image executes a previous step within fixed processing time allocated to the previous step of the step. In this manner, an end-to-end transmission delay of the video data can be strictly controlled, and a processing delay between sub-images can be reduced. In addition, according to the transmission pipeline structure provided in this embodiment of this application, image quality of one or more sub-images transmitted within a preset time interval is sacrificed, to ensure that the receive end can display a highly continuous and acceptable video image. In other words, after transmission through the unstable channel, acceptable or even high-quality display image quality can still be provided for the receive end, or when Wi-Fi bandwidth suddenly changes, a maximally continuous video image with acceptable image quality can still be provided for the receive end.

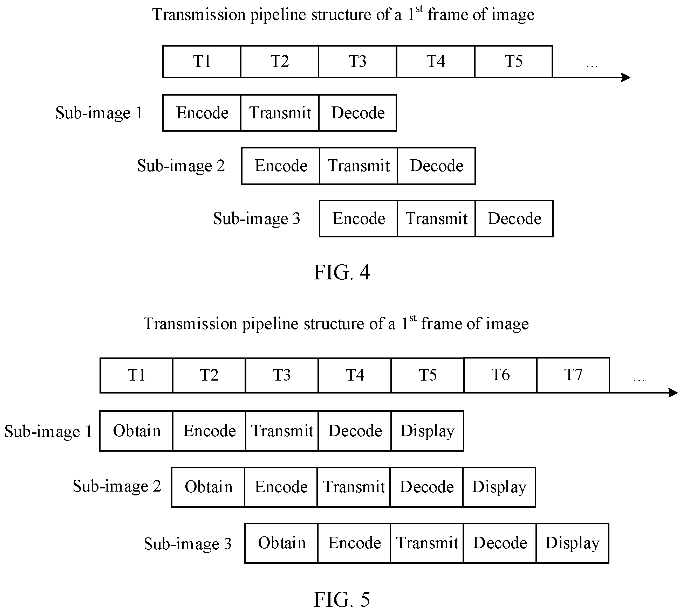

For example, a 1^{st} frame of image of the video data includes three sub-images (a sub-image 1, a sub-image 2, and a sub-image 3). FIG. 4 shows a transmission pipeline structure according to an embodiment of this application. As shown in FIG. 4, T1 to T5 represent five adjacent time intervals, and lengths of T1 to T5 are the same and are all equal to a preset length.

Sub-image 1: is encoded within T1, transmitted within T2, and decoded within T3.

Sub-image 2: is encoded within T2, transmitted within T3, and decoded within T4.

Sub-image 3: is encoded within T3, transmitted within T4, and decoded within T5.

It should be noted that the first frame of image in this embodiment of this application may be the 1^{st} frame of image in FIG. 4, the first sub-image may be the sub-image 1 in FIG. 4, the second sub-image may be the sub-image 2 in FIG. 4, the first preset time interval may be T2 in FIG. 4, and the second preset time interval may be T3 in FIG. 4.

It should be further noted that FIG. 4 shows only an example of a transmission pipeline structure of the 1^{st} frame of image, and a transmission pipeline structure of another frame of image in a frame sequence of the video data is similar to that in FIG. 4. To avoid repetition, details are not described herein again.

Optionally, in this embodiment of this application, processing time for obtaining and displaying the video data may be further agreed on and controlled.

For example, a 1^{st} frame of image of the video data includes three sub-images (a sub-image 1, a sub-image 2, and a sub-image 3). FIG. 5 shows another transmission pipeline structure according to an embodiment of this application. Processing steps of obtaining and displaying the sub-image are added to the transmission pipeline structure shown in FIG. 5 with reference to the transmission pipeline structure shown in FIG. 4. As shown in FIG. 5, T1 to T7 represent seven adjacent time intervals, and lengths of T1 to T7 are the same and are all equal to a preset length.

Sub-image 1: is obtained within T1, encoded within T2, transmitted within T3, decoded within T4, and displayed within T5.

Sub-image 2: is obtained within T2, encoded within T3, transmitted within T4, decoded within T5, and displayed within T6.

Sub-image 3: is obtained within T3, encoded within T4, transmitted within T5, decoded within T6, and displayed within T7.

It should be noted that the first frame of image in this embodiment of this application may be the 1^{st} frame of image in FIG. 5, the first sub-image may be the sub-image 1 in FIG. 5, the second sub-image may be the sub-image 2 in FIG. 5, the first preset time interval may be T3 in FIG. 5, and the second preset time interval may be T4 in FIG. 5.

It should be noted that a length of the time interval T in FIG. 4 or FIG. 5 may be set with reference to duration required by the transmit end and the receive end to perform each step. For example, a preset length of each time interval may be a longest time required for performing each step.

Processing duration of the obtaining, encoding, decoding, and displaying steps can be basically completed within a preset time interval by using an existing hardware design, software implementation, or the like. Therefore, an end-to-end transmission delay can be strictly controlled provided that a processing time of the transmission step is controlled.

The following describes in detail several solutions provided in embodiments of this application for completing the transmission step within the preset time interval.

Optionally, in S230, at an end moment of the first preset time interval, the plurality of layers of bitstreams of the first sub-image has the following three transmission results.

Transmission result 1: All the plurality of layers of bitstreams of the first sub-image are successfully transmitted.

Transmission result 2: At least one layer of bitstreams in the plurality of layers of bitstreams of the first sub-image is successfully transmitted.

Transmission result 3: All the plurality of layers of bitstreams of the first sub-image fail to be transmitted.

In the case of the transmission result 1, the plurality of layers of bitstreams of the first sub-image are all successfully transmitted within the first preset time interval, and the receive end may perform decoding based on the plurality of layers of bitstreams that are of the first sub-image and that are successfully transmitted, to obtain the first sub-image, and refresh and display the first sub-image in a display interface. Similarly, each time the receive end receives a plurality of layers of bitstreams of one sub-image, the receive end may decode the plurality of layers of bitstreams of the sub-image to obtain the sub-image, and refresh and display the sub-image in a display interface. This can ensure image quality and integrity of an image displayed by the receive end while reducing an end-to-end delay of presenting an image to a user.

For example, a frame (X) of image is divided into three sub-images, and layered encoding is performed on each sub-image is to obtain three layers. A comparison between a sending order in this application and a sending order of existing SVC/SHVC may be shown in Table 2. It should be understood that the sending order shown in Table 2 may also be understood as a coding order, and in some cases, may also be understood as a receiving order.

**Table 2**

| Time unit | Sending order of existing SVC/SHVC | Sending order in this application |
|---|---|---|
| 1 | **Frame (X) sub-image (0) bitstream layer (0)** | **Frame (X) sub-image (0) bitstream layer (0)** |
| 2 | Frame (X) sub-image (1) bitstream layer (0) | **Frame (X) sub-image (0) bitstream layer (1)** |
| 3 | Frame (X) sub-image (2) bitstream layer (0) | **Frame (X) sub-image (0) bitstream layer (2)** |
| 4 | **Frame (X) sub-image (0) bitstream layer (1)** | Frame (X) sub-image (1) bitstream layer (0) |
| 5 | Frame (X) sub-image (1) bitstream layer (1) | Frame (X) sub-image (1) bitstream layer (1) |
| 6 | Frame (X) sub-image (2) bitstream layer (1) | Frame (X) sub-image (1) bitstream layer (2) |
| 7 | **Frame (X) sub-image (0) bitstream layer (2)** | Frame (X) sub-image (2) bitstream layer (0) |
| 8 | Frame (X) sub-image (1) bitstream layer (2) | Frame (X) sub-image (2) bitstream layer (1) |
| 9 | Frame (X) sub-image (2) bitstream layer (2) | Frame (X) sub-image (2) bitstream layer (2) |

It can be learned from Table 2 that, when a channel condition is good, if the coding order and the sending order of the existing SVC/SHVC standard, the transmit end can complete sending of three layers of bitstreams of the frame (X) sub-image (0) only at an end of the seventh time unit (that is, a time interval) (as shown in boldface parts in the sending order of the existing SVC/SHVC). Correspondingly, the receive end needs to decode and display the frame (X) of image until the receive end successfully transmits other sub-images of the bitstream layer (2).

However, according to the sending order in this application, when a channel condition is good, the transmit end may complete sending of three layers of bitstreams of the frame (X) sub-image (0) at an end of the third time unit (as shown by boldface parts in the sending order in this application). Correspondingly, after receiving the three layers of bitstreams of the sub-image (0), the receive end may decode and display the sub-image (0), thereby reducing an end-to-end transmission delay of presenting an image to a user.

It should be noted that the transmission result 2 and the transmission result 3 may be that some or all bitstreams of the first sub-image fail to be transmitted within the first preset time interval because channel bandwidth is unstable or the channel bandwidth is low.

In the case of the foregoing transmission result 2, the transmit end successfully sends at least one layer of bitstreams in the plurality of layers of bitstreams of the first sub-image within the first preset time interval, that is, a bitstream other than the at least one layer of bitstreams in the plurality of layers of bitstreams of the first sub-image fails to be sent. Correspondingly, the receive end successfully receives the at least one layer of bitstreams in the plurality of layers of bitstreams of the first sub-image within the first preset time interval, that is, a bitstream other than the at least one layer of bitstreams in the plurality of layers of bitstreams of the first sub-image fails to be received.

Optionally, the transmit end may process a target bitstream of the first sub-image within the first preset time interval in a plurality of manners. The target bitstream includes a bitstream that fails to be sent in the plurality of layers of bitstreams of the first sub-image, that is, the target bitstream includes a bitstream other than the at least one layer of bitstreams in the plurality of layers of bitstreams of the first sub-image.

In a possible implementation, the transmit end may directly discard the target bitstream, and send the plurality of layers of bitstreams of the second sub-image within the second preset time interval. Correspondingly, the receive end may decode only the at least one layer of bitstreams that are successfully received and that are of the first sub-image to obtain the first sub-image, without waiting for the target bitstream of the first sub-image, and continue to receive the plurality of layers of bitstreams of the second sub-image from the transmit end within the second time interval.

In this way, a transmission delay can be reduced while image quality and smoothness of an image displayed at the receive end are ensured as much as possible, and the transmission delay can be strictly controlled and managed.

In another possible implementation, the transmit end may send the target bitstream of the first sub-image in a remaining time in another preset time interval, where the another preset time interval may be a preset time interval used to send another sub-image of the first frame of image, and the another sub-image is a sub-image that is encoded or sent after the first sub-image. In addition, when a plurality of layers of bitstreams of the another sub-image are all successfully sent, there is still remaining time in the another preset time interval.

In this way, it can be ensured that the plurality of layers of bitstreams of the first sub-image can be sent to the receive end, thereby providing reference for subsequent decoding of the another sub-image by the receive end.

In a possible implementation, if all the plurality of layers of bitstreams of the second sub-image are successfully sent within the second preset time interval, there is still remaining time in the second preset time interval, and the transmit end may, within the remaining time in the second preset time interval, send the target bitstream of the first sub-image to the receive end layer by layer.

It should be noted that, if a portion of the target bitstream of the first sub-image still fails to be sent within the remaining time in the second preset time interval, the transmit end may continue to send the portion of the target bitstream within a remaining time in a next preset time interval, and so on, until all the plurality of bitstreams of the first sub-image are successfully sent.

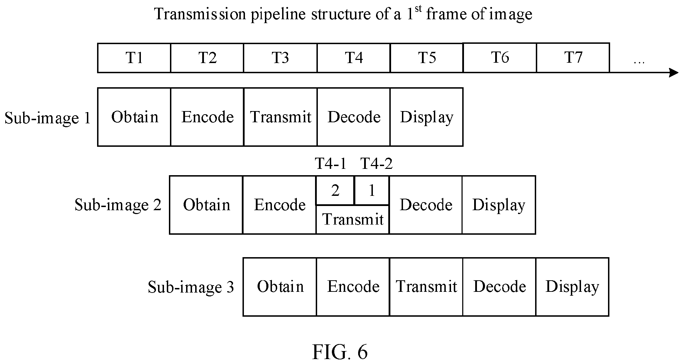

For example, FIG. 6 shows still another transmission pipeline structure according to an embodiment of this application. As shown in FIG. 6, T1 to T8 represent eight adjacent time intervals, and lengths of T1 to T8 are the same and are all equal to a preset length.

Sub-image 1: The sub-image 1 is obtained within T1 and encoded within T2, at least one layer of bitstreams in a plurality of layers of bitstreams of the sub-image 1 is transmitted within T3, and the sub-image 1 is decoded within T4 and displayed within T5.

Sub-image 2: The sub-image 2 is obtained within T2 and encoded within T3, and transmitted within T4-1. Because there is a remaining time T4-2 in T4, some or all of remaining bitstreams of the sub-image 1 may be transmitted within T4-2. The sub-image 2 is decoded within T5 and displayed within T6.

Sub-image 3: is obtained within T3, encoded within T4, transmitted within T5, decoded within T6, and displayed within T7.

It should be noted that the first frame of image in this embodiment of this application may be the 1^{st} frame of image in FIG. 6, the first sub-image may be the sub-image 1 in FIG. 6, the second sub-image may be the sub-image 2 in FIG. 6, the first preset time interval may be T3 in FIG. 6, and the second preset time interval may be T4 in FIG. 6.

In the case of the transmission result 3, when the transmit end fails to transmit all the plurality of layers of bitstreams of the first sub-image within the first preset time interval, if the transmit end continues to transmit the plurality of layers of bitstreams of the second sub-image within a next preset time interval, when the receive end displays an image, an area in which the first sub-image is located may not be displayed, thereby affecting user experience. Therefore, in this case, the plurality of layers of bitstreams of the first sub-image should be retransmitted as soon as possible, and then the plurality of layers of bitstreams of the second sub-image continue to be transmitted, to ensure integrity and smoothness of an image displayed at the receive end while reducing a transmission delay as much as possible.

Optionally, the transmit end and the receive end may retransmit the plurality of layers of bitstreams of the first sub-image in a plurality of manners. This is not limited in this embodiment of this application.

In a possible implementation, the transmit end may re-send the bitstreams of the first sub-image layer by layer to the receive end within the second preset time interval, where the second preset time interval is adjacent to the first preset time interval and is later than the first preset time interval. Correspondingly, the receive end may re-receive, within the second preset time interval, the bitstreams of the first sub-image layer by layer from the transmit end.

Because retransmission of the plurality of layers of bitstreams of the first sub-image occupies the second preset time interval that is originally used to transmit the second sub-image, the transmit end may retransmit the plurality of layers of bitstreams of the first sub-image within the second preset time interval, and send the bitstreams of the second sub-image layer by layer to the receive end within a third preset time interval, where the third preset time interval is adjacent to the second preset time interval and is later than the second preset time interval. Correspondingly, the receive end receives, layer by layer within the third preset time interval, the bitstreams of the second sub-image from the transmit end.

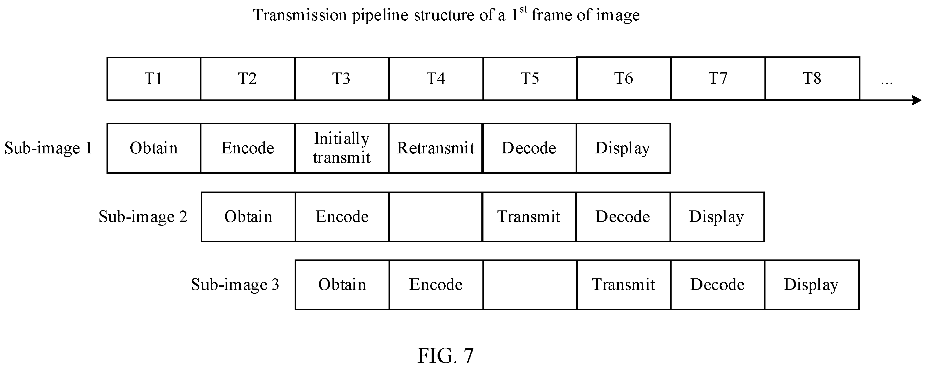

FIG. 7 shows still another transmission pipeline structure according to an embodiment of this application. As shown in FIG. 7, T1 to T8 represent eight adjacent time intervals, and lengths of T1 to T8 are the same and are all equal to a preset length.

Sub-image 1: The sub-image is obtained within T1, encoded within T2, and initially transmitted within T3. If the transmission fails within T3, the sub-image is retransmitted within T4, decoded within T5, and displayed within T6.

Sub-image 2: is obtained within T2, encoded within T3, transmitted within T5, decoded within T6, and displayed within T7.

Sub-image 3: is obtained within T3, encoded within T4, transmitted within T6, decoded within T7, and displayed within T8.

It should be noted that the first frame of image in this embodiment of this application may be the 1^{st} frame of image in FIG. 7, the first sub-image may be the sub-image 1 in FIG. 7, the second sub-image may be the sub-image 2 in FIG. 7, the first preset time interval may be T3 in FIG. 7, the second preset time interval may be T4 in FIG. 7, and the third preset time interval may be T5 in FIG. 7.

In another possible implementation, the transmit end may further re-send the plurality of layers of bitstreams of the first sub-image within a remaining time in another preset time interval, where the another preset time interval may be a preset time interval used to send another sub-image of the first frame of image, and the another sub-image is a sub-image that is encoded or sent after the first sub-image. In addition, when a plurality of layers of bitstreams of the another sub-image are all successfully sent, there is still remaining time in the another preset time interval.

For example, if all the plurality of layers of bitstreams of the second sub-image are successfully sent within the second preset time interval, there is still remaining time in the second preset time interval, and the transmit end may, within the remaining time in the second preset time interval, re-send the plurality of layers of bitstreams of the first sub-image to the receive end layer by layer.

Optionally, before S220, the method may further include: The transmit end receives feedback information from the receive end, where the feedback information includes at least one of a first quantity, a second quantity, or first bandwidth, the first quantity indicates a quantity of layers of bitstreams that are received by the receive end and that are of a third sub-image, the second quantity indicates a quantity of layers of bitstreams that are successfully decoded by the receive end and that are of the third sub-image, the first bandwidth indicates bandwidth for transmitting the bitstreams of the third sub-image, and the bitstreams of the third sub-image are obtained by performing layered encoding on the third sub-image, where the plurality of sub-images include the third sub-image, and the receive end has completed decoding of the bitstreams of the third sub-image, or the third sub-image belongs to a second frame of image, and the second frame of image is located before the first frame of image in a frame sequence of a video.

It should be noted that the foregoing merely illustrates content included in the feedback information. Optionally, the feedback information may further include other information that can feed back a channel condition. This is not limited in this embodiment of this application.

In a possible implementation, the receive end may send the feedback information to the transmit end within a preset time interval used to display the first sub-image.

For example, as shown in FIG. 6, the sub-image 1 is displayed within T5, and fed back within T5.

In another possible implementation, the transmission pipeline structure may further include a preset time interval used to send the feedback information, and the preset time interval used to send the feedback information may be between a preset time interval used for decoding and a preset time interval used for displaying.

For example, T8 may be further included between T4 and T5 in FIG. 6. The sub-image 1 is decoded within T4, fed back within T8, and displayed within T5.

Correspondingly, S220 may include: The transmit end performs layered encoding on the first sub-image based on the feedback information, to obtain the plurality of layers of bitstreams of the first sub-image.

Specifically, the transmit end may determine an encoding parameter of the first sub-image based on the feedback information, and the encoding parameter includes at least one of a start Qp, a quantity of layers, a coding scheme, or a reference frame of the first sub-image, and the coding scheme may include intra-frame coding or inter-frame coding; and perform layered encoding on the first sub-image to obtain the plurality of layers of bitstreams of the first sub-image based on the encoding parameter.

In a possible implementation, the transmit end may obtain statistical information based on the feedback information, where the statistical information may include at least one of an average encoding bit rate of each layer of bitstreams in first duration (in a rolling time window), an average channel bandwidth in the first duration, or an instantaneous encoding bit rate or instantaneous channel bandwidth of each layer in the first duration; and determine an encoding parameter of the first sub-image based on the statistical information.

For example, when a ratio of the average channel bandwidth to the average encoding bit rate in the first duration is high, or a ratio of the instantaneous channel bandwidth to the instantaneous encoding bit rate is high, an encoding parameter used to improve image quality may be used; or when a ratio of the average channel bandwidth to the average encoding bit rate in the first duration is low, or a ratio of the instantaneous channel bandwidth to the instantaneous encoding bit rate is low, or a bitstream is continuously lost, an encoding parameter used to reduce a bit rate may be used.

Optionally, using the encoding parameter used to improve the image quality may include: increasing the start Qp, decreasing the quantity of layers, using inter-frame coding and intra-frame coding, and the like; and using the encoding parameter used to decrease the bit rate may include: decreasing the start Qp, increasing the quantity of layers, using only inter-frame coding, and the like.

For another example, when the bandwidth within the first duration is stable, the quantity of layers may be reduced; or when the bandwidth in the first duration fluctuates or changes greatly, the quantity of layers may be increased.

It should be noted that a smaller quantity of layers of the sub-image indicates a more complex coding scheme of each layer, and on the contrary, a larger quantity of layers of the sub-image indicates a simpler coding scheme of each layer. When the quantity of layers is small, inter-frame coding and intra-frame coding may be used. When the quantity of layers is large, only inter-frame coding may be used.

Optionally, the encoding parameter may further include an encoding tool, where the encoding tool may include at least one of a deblocking filter, a quantity of alternative modes for intra coding, or sample adaptive offset (sample adaptive offset, SAO).

It should be noted that a smaller quantity of layers indicates a more complex encoding tool used at each layer, and on the contrary, a larger quantity of layers indicates a simpler encoding tool used at each layer. For example, when the quantity of layers is small, the deblocking filter and a larger quantity of alternative modes for intra-frame coding and sampling adaptive compensation (SAO) are used. When the quantity of layers is large, only a smaller quantity of alternative modes for intra-frame coding is used.

In an existing video transmission application, a transmission result of each frame of image/sub-image is not required to be fed back, but a possible image error is mainly recovered by periodically using an intra-coded frame. Because the intra-coded frame uses itself as a reference, a data amount may be increased by using the intra-coded frame, and therefore a bit rate is high.

However, in this embodiment of this application, a real-time fluctuation and change may exist due to the channel condition such as the bandwidth, and the channel condition directly affects the image transmission delay and image quality of the displayed image. In this embodiment of this application, the receive end feeds back a transmission result of each sub-image in a timely manner, so that the transmit end can dynamically adjust an encoding policy in a timely manner based on the feedback information, thereby achieving high video compression efficiency, reducing requirements on bandwidth and transmission power consumption, finally improving quality of the displayed image, and avoiding an image transmission error. In addition, in this embodiment of this application, feedback is performed by using a feedback signal, so that the use of intra-coded frames can be reduced, thereby reducing the bit rate.

It should be noted that, in this embodiment of this application, only a process of transmitting the first frame of image of the video data is used as an example to describe the method 100. A process of transmitting another frame of image of the video data is similar to a process of transmitting the first frame of image. For details, refer to the process of transmitting the first frame of image. To avoid repetition, details are not described herein again.

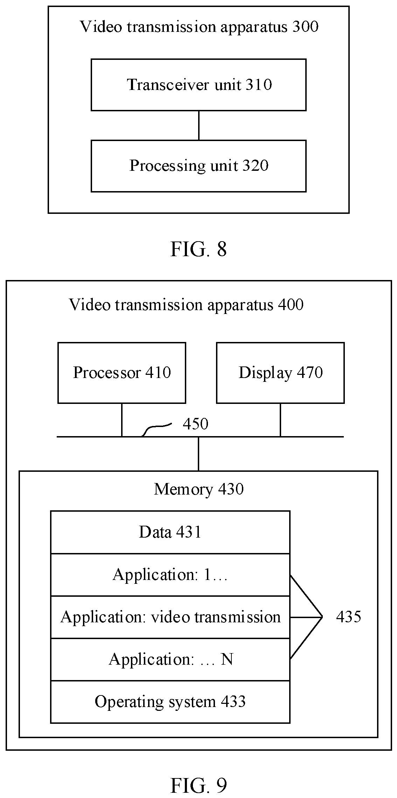

Based on a same inventive concept as the foregoing method, FIG. 8 provides a video transmission apparatus 300 according to an embodiment of this application. The apparatus 300 is suitable for implementing the embodiments described in this application. The apparatus 300 may be the transmit end or the receive end in the embodiment of the method 200. This is not limited in this embodiment of this application.

It may be understood that, to implement the foregoing functions, the apparatus 300 includes a corresponding hardware and/or software module for performing each function. Algorithm steps in the examples described with reference to embodiments disclosed in this specification can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In embodiments, functional modules of the apparatus 300 may be obtained through division according to the foregoing method examples. For example, the functional modules may be obtained through division corresponding to various functions, or two or more functions may be integrated into one processing module. The integrated module may be implemented in a form of hardware. It should be noted that, in embodiments, module division is an example, is merely logical function division, and may be other division during actual implementation.

When each functional module is obtained through division corresponding to each function, FIG. 8 is a schematic diagram of a possible composition of the transmit end and the receive end in the foregoing embodiments. As shown in FIG. 8, the apparatus 300 may include a transceiver unit 310 and a processing unit 320. The processing unit 320 may control the transceiver unit 310 to implement the method in the embodiment of the method 200, and/or another process of the technology described in this specification.

It should be noted that all related content of the steps in the foregoing method embodiments may be cited in function description of corresponding functional modules. Details are not described herein again.

The apparatus 300 provided in this embodiment is configured to perform the method 200. Therefore effects that are the same as those of the foregoing implementation method can be achieved.

When an integrated unit is used, the apparatus 300 may include a processing unit, a storage unit, and a communication unit. The processing unit may be configured to control and manage an action of the apparatus 300, for example, may be configured to support the apparatus 300 in performing steps performed by the foregoing units. The storage unit may be configured to support the apparatus 300 in storing program code, data, and the like. The communication unit may be configured to support communication between the apparatus 300 and another device.

The processing unit may be a processor or a controller. The processor may implement or execute various example logical blocks, modules, and circuits described with reference to content disclosed in this application. Alternatively, the processor may be a combination of implementing a computing function, for example, a combination of one or more microprocessors, a combination of a video codec, a digital signal processor (digital signal processor, DSP), a graphics processing unit (graphics processing unit, GPU), an application-specific integrated circuit (application-specific integrated circuit, ASIC), an image signal processor (image signal processor, ISP), a modem processor, an application processor (application processor, AP), a field programmable gate array (field programmable gate array, FPGA) or another programmable logic device, a discrete gate or transistor logic device, a discrete hardware component, and a microprocessor, and so on. The storage unit may be a memory. The communication unit may be specifically a device that communicates with another electronic device, for example, a radio frequency circuit, a Bluetooth chip, and a Wi-Fi chip.

In a possible implementation, the apparatus 300 in this embodiment of this application may be a schematic block diagram of a video transmission apparatus 400 having a structure shown in FIG. 9. The apparatus 400 is suitable for implementing the embodiment described in this application.

In a possible implementation, the apparatus 400 may be deployed at a transmit end or a receive end.

For example, when deployed at the transmit end, the apparatus 400 may be referred to as a video encoding apparatus 400, and when deployed at the receive end, the apparatus 400 may be referred to as a video decoding apparatus 400.

The apparatus 400 may include a processor 410, a memory 430, and a bus system 450. The processor and the memory are connected through the bus system. The memory is configured to store instructions. The processor is configured to execute the instructions stored in the memory. The memory of the video transmission apparatus stores program code, and the processor may invoke the program code stored in the memory to perform video transmission methods described in this application. To avoid repetition, details are not described herein again.

In embodiments of this application, the processor 410 may be a central processing unit (CPU), or the processor 410 may be another general purpose processor, a video codec, a digital signal processor (DSP), a graphics processing unit (GPU), an application-specific integrated circuit (ASIC), an image signal processor (ISP), a modem processor, an application processor (AP), a field programmable gate array (FPGA) or another programmable logic device, a discrete gate or transistor logic device, a discrete hardware component, or the like. The general-purpose processor may be a microprocessor, or the processor may be any conventional processor or the like.

The memory 430 may include a read-only memory (read-only memory, ROM) device or a random access memory (random access memory, RAM) device. Any other proper type of storage device may also be used as the memory 430. The memory 430 may include code and data 431 that are accessed by the processor 410 through the bus 450. The memory 430 may further include an operating system 433 and applications 435. The applications 435 include at least one program that enables the processor 410 to perform the video transmission method described in embodiments of this application. For example, the applications 435 may include applications 1 to N, and further include performing the video transmission method described in this application.

In addition to a data bus, the bus system 450 may further include a power bus, a control bus, a status signal bus, and the like. However, for clarity of description, various buses are marked as the bus system 450 in the figure.

Optionally, the apparatus 400 may further include one or more output devices, such as a display 470. In an example, the display 470 may be a touch display that combines a display and a touch unit that operably senses touch input. The display 470 may be connected to the processor 410 through the bus 450.

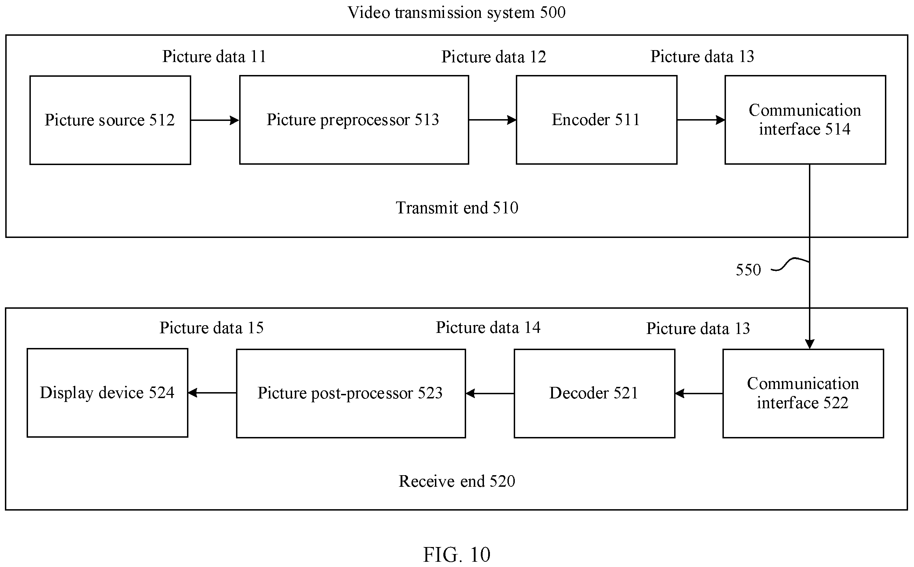

Based on the foregoing method 200, FIG. 10 is a schematic block diagram of another video transmission system 500 according to an embodiment of this application. As shown in FIG. 10, the video transmission system 500 may include a transmit end 510 and a receive end 520. The transmit end 510 generates encoded video data. Therefore, the transmit end 510 may be referred to as a video encoding apparatus. The receive end 520 may decode the encoded video data generated by the transmit end 510. Therefore, the receive end 520 may be referred to as a video decoding apparatus.

Optionally, various implementations of the transmit end 510, the receive end 520, or both the transmit end 510 and the receive end 520 may include one or more processors and a memory coupled to the one or more processors. The memory may include but is not limited to a read-only memory (ROM), a random access memory (RAM), an electrically erasable programmable read-only memory (electrically erasable programmable read-only memory, EEPROM), a flash memory, or any other medium that can be used to store desired program code in a form of instructions or a data structure accessible by a computer, as described in this specification.

Optionally, the transmit end 510 and the receive end 520 may include various apparatuses, including a desktop computer, a mobile computing apparatus, a notebook (for example, a laptop) computer, a tablet computer, a set-top box, a telephone handset such as a so-called "smart" phone, a television set, a camera, a display apparatus, a digital media player, a video game console, an in-vehicle computer, a wireless communication device, or the like.

Although FIG. 10 depicts the transmit end 510 and the receive end 520 as separate devices, the device embodiment may also include both the transmit end 510 and the receive end 520 or functionalities of the transmit end 510 and the receive end 520, that is, the transmit end 510 or a corresponding functionality and the receive end 520 or a corresponding functionality. In such an embodiment, the transmit end 510 or the corresponding functionality and the receive end 520 or the corresponding functionality may be implemented by using same hardware and/or software or by using separate hardware and/or software or any combination thereof.

A communication connection may be performed between the transmit end 510 and the receive end 520 through a link 530, and the receive end 520 may receive the encoded video data from the transmit end 510 through the link 530. The link 530 may include one or more media or apparatuses capable of moving the encoded video data from the transmit end 510 to the receive end 520. In an example, the link 530 may include one or more communication media that enable the transmit end 510 to directly transmit the encoded video data to the receive end 520 in real time. In this example, the transmit end 510 may modulate the encoded video data according to a communication standard (for example, a wireless communication protocol), and may transmit modulated video data to the receive end 520. The one or more communication media may include a wireless and/or wired communication medium, for example, a radio frequency (radio frequency, RF) spectrum or one or more physical transmission lines. The one or more communication media may form a part of a packet-based network, and the packet-based network is, for example, a local area network, a wide area network, or a global network (for example, the internet). The one or more communication media may include a router, a switch, a base station, or another device that facilitates communication from the transmit end 510 to the receive end 520.

The transmit end 510 includes an encoder 511. In addition, optionally, the transmit end 510 may further include a picture source 512, a picture preprocessor 513, and a communication interface 514. In a specific implementation form, the encoder 511, the picture source 512, the picture preprocessor 513, and the communication interface 514 may be hardware components in the transmit end 510, or may be software programs in the transmit end 510. They are separately described as follows.

The picture source 512 may include or be any type of picture capture device configured to, for example, capture a real-world picture; and/or any type of device for generating a picture or comment (for screen content encoding, some text on a screen is also considered as a part of a to-be-encoded picture or image), for example, a computer graphics processing unit configured to generate a computer animation picture; or any type of device for obtaining and/or providing a real-world picture or a computer animation picture (for example, screen content or a virtual reality (virtual reality, VR) picture); and/or any combination thereof (for example, an augmented reality (augmented reality, AR) picture). The picture source 512 may be a camera configured to capture a picture or a memory configured to store a picture. The picture source 512 may further include any type of (internal or external) interface through which a previously captured or generated picture is stored and/or a picture is obtained or received. When the picture source 512 is a camera, the picture source 512 may be, for example, a local camera, or an integrated camera integrated into the source device. When the picture source 512 is a memory, the picture source 512 may be a local memory or, for example, an integrated memory integrated into the source device. When the picture source 512 includes an interface, the interface may be, for example, an external interface for receiving a picture from an external video source. The external video source is, for example, an external picture capturing device such as a camera, an external memory, or an external picture generation device. The external picture generation device is, for example, an external computer graphics processing unit, a computer, or a server. The interface may be any type of interface, for example, a wired or wireless interface or an optical interface, according to any proprietary or standardized interface protocol.

It should be noted that, in this embodiment of this application, a picture transmitted by the picture source 512 to the picture preprocessor 513 may also be referred to as raw picture data 11.

The picture preprocessor 513 is configured to receive the raw picture data 11 and perform preprocessing on the raw picture data 11 to obtain a preprocessed picture 12 or preprocessed picture data 12. For example, the picture preprocessor 513 may perform preprocessing: refinement, color format transformation (for example, from the RGB format to the YUV format), color correction, or denoising.

In a possible implementation, the picture source 512 and/or the picture preprocessor 513 are/is configured to perform S210 and a related process in the foregoing method embodiment of this application.

The encoder 511 (or referred to as a video encoder 511) is configured to receive the preprocessed picture data 12, and encode the picture data 12, to provide encoded picture data 13.

In a possible implementation, the encoder 511 is configured to perform S220, S260, and related processes in the foregoing method embodiments of this application.

The communication interface 514 may be configured to receive the encoded picture data 13, and transmit the encoded picture data 13 to the receive end 520 or any other device (for example, a memory) through the link 530 for storage or direct reconstruction. The any other device may be any device for decoding or storage. The communication interface 514 may be, for example, configured to encapsulate the encoded picture data 13 into an appropriate format, for example, a data packet, for transmission over the link 530.

The receive end 520 includes a decoder 521. In addition, optionally, the receive end 520 may further include a communication interface 522, a picture post-processor 523, and a display device 524. They are separately described as follows.

The communication interface 522 may be configured to receive the encoded picture data 13 from the transmit end 510 or any other source. The any other source is, for example, a storage device. The storage device is, for example, an encoded picture data storage device. The communication interface 522 may be configured to transmit or receive the encoded picture data 13 through the link 530 between the transmit end 510 and the receive end 520 or by using any type of network, and the link 530 is, for example, a wireless connection. The communication interface 522 may be, for example, configured to decapsulate the data packet transmitted through the communication interface 514, to obtain the encoded picture data 13.

Both the communication interface 522 and the communication interface 514 may be configured as unidirectional communication interfaces or bidirectional communication interfaces, and may be configured to, for example, send and receive messages to establish a connection, and acknowledge and exchange any other information related to a communication link and/or data transmission such as encoded picture data transmission.

In a possible implementation, the communication interface 514 and the communication interface 522 are configured to perform S230, S270, and related processes in the foregoing method embodiments of this application.

The decoder 521 (or referred to as a video decoder 521) is configured to receive the encoded picture data 13 and provide decoded picture data 14 or a decoded picture 14.

In a possible implementation, the decoder 521 is configured to perform S240, S280, and related processes in the foregoing method embodiments of this application.

The picture post-processor 523 is configured to post-process the decoded picture data 14 (also referred to as reconstructed picture data) to obtain post-processed picture data 15. For example, the picture post-processor 523 may perform post-processing: color format transformation (for example, from a YUV format to an RGB format), color correction, refinement, resampling, or any other processing, and may be further configured to transmit the post-processed picture data 33 to the display device 524.

The display device 524 is configured to receive the post-processed picture data 15 to display a picture, for example, to a user or a viewer. The display device 524 may be or include any type of display configured to present a reconstructed picture, for example, an integrated or external display or monitor. For example, the display may include a liquid crystal display (liquid crystal display, LCD), an organic light emitting diode (organic light emitting diode, OLED) display, a plasma display, a projector, a micro LED display, a liquid crystal on silicon (liquid crystal on silicon, LCoS), a digital light processor (digital light processor, DLP), or any type of other display.

In a possible implementation, the display device 524 is configured to perform S250, S290, and related processes in the foregoing method embodiments of this application.

Although FIG. 10 depicts the transmit end 510 and the receive end 520 as separate devices, the device embodiment may also include both the transmit end 510 and the receive end 520 or functionalities of the transmit end 510 and the receive end 520, that is, the transmit end 510 or a corresponding functionality and the receive end 520 or a corresponding functionality. In such an embodiment, the transmit end 510 or the corresponding functionality and the receive end 520 or the corresponding functionality may be implemented by using same hardware and/or software or by using separate hardware and/or software or any combination thereof.

As will be apparent for a person skilled in the art based on the descriptions, existence and (exact) split of functionalities of the different units or functionalities of the transmit end 510 and/or the receive end 520 shown in FIG. 10 may vary depending on an actual device and application. The transmit end 510 and the receive end 520 may include any one of the following devices, including any type of handheld or stationary device, for example, a notebook or laptop computer, a mobile phone, a smartphone, a pad or a tablet computer, a video camera, a desktop computer, a set-top box, a television set, a camera, a vehicle-mounted device, a display, a digital media player, a video game console, a video streaming transmission device (such as a content service server or a content distribution server), and may not use or may use any type of operating system.

Both the encoder 511 and the decoder 521 may be implemented as any one of various appropriate circuits, for example, one or more microprocessors, a digital signal processor (DSP), an application-specific circuit (ASIC), a field programmable gate array (FPGA), discrete logic, hardware, or any combination thereof. If the technologies are implemented partially by using software, a device may store a software instruction in a suitable non-transitory computer-readable storage medium and may execute the instruction through hardware by using one or more processors, to perform the technologies in this application. Any one of the foregoing content (including hardware, software, a combination of hardware and software, and the like) may be considered as one or more processors.

An embodiment of this application further provides a computer storage medium. The computer storage medium stores computer instructions; and when the computer instructions are run on an electronic device, the electronic device is enabled to perform the foregoing related method steps, to implement the video transmission method in the foregoing embodiments.

An embodiment of this application further provides a computer program product. When the computer program product is run on a computer, the computer is enabled to perform the foregoing related steps, to implement the video transmission method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the chip to perform the video transmission method in the foregoing method embodiments.

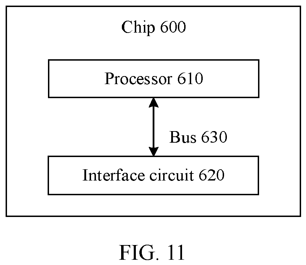

FIG. 11 is a schematic diagram of a structure of a chip 600. The chip 600 includes one or more processors 610 and an interface circuit 620. Optionally, the chip 600 may further include a bus 630.

The processor 610 may be an integrated circuit chip, and has a signal processing capability. In an implementation process, the steps in the foregoing method may be completed by using an integrated logic circuit of hardware in the processor 610 or instructions in a form of software. The foregoing processor 610 may be a general-purpose processor, a GPU, a DSP, an ASIC, an FPGA or another programmable logic device, a discrete gate or transistor logic device, or a discrete hardware component. The processor 610 may implement or perform the methods and steps that are disclosed in embodiments of this application. The general-purpose processor may be a microprocessor, or the processor may be any conventional processor or the like.

The interface circuit 620 may be used to send or receive data, instructions, or information. The processor 610 may process data, instructions, or other information received through the interface circuit 620, and send, through the interface circuit 620, information obtained after processing.

Optionally, the chip further includes a memory. The memory may include a read-only memory and a random access memory, and provide operation instructions and data for the processor. A part of the memory may further include a non-volatile random access memory (non-volatile random access memory, NVRAM).

Optionally, the memory stores an executable software module or a data structure, and the processor may perform a corresponding operation by invoking operation instructions (the operation instructions may be stored in an operating system) stored in the memory.

Optionally, the chip may be used in the access apparatus or the access control apparatus in embodiments of this application. Optionally, the interface circuit 620 may be used to output an execution result of the processor 610. For the video transmission method provided in one or more embodiments of this application, refer to the foregoing embodiments. Details are not described herein again.

It should be noted that functions corresponding to each of the processor 610 and the interface circuit 620 may be implemented by using a hardware design, may be implemented by using a software design, or may be implemented by combining software and hardware. This is not limited herein.

The video transmission apparatus, the video transmission system, the computer storage medium, the computer program product, or the chip provided in embodiments is configured to perform the corresponding method provided above. Therefore, for beneficial effects that can be achieved, refer to the beneficial effects in the corresponding method provided above. Details are not described herein again.

A person skilled in the art can appreciate that functions described with reference to various illustrative logical blocks, modules, and algorithm steps disclosed and described herein may be implemented by hardware, software, firmware, or any combination thereof. If implemented by software, the functions described with reference to the illustrative logical blocks, modules, and steps may be stored in or transmitted over a computer-readable medium as one or more instructions or code and executed by a hardware-based processing unit. The computer-readable medium may include a computer-readable storage medium, which corresponds to a tangible medium such as a data storage medium, or may include any communication medium that facilitates transmission of a computer program from one place to another (for example, according to a communication protocol). In this manner, the computer-readable medium may generally correspond to: (1) a non-transitory tangible computer-readable storage medium, or (2) a communication medium such as a signal or a carrier. The data storage medium may be any usable medium that can be accessed by one or more computers or one or more processors to retrieve instructions, code, and/or data structures for implementing the technologies described in this application. A computer program product may include a computer-readable medium.

By way of example and not limitation, such computer-readable storage media may include a (RAM), a (ROM), an (EEPROM), a (CD-ROM) or another optical disc storage apparatus, a magnetic disk storage apparatus or another magnetic storage apparatus, a flash memory, or any other medium that can store required program code in a form of instructions or data structures and that can be accessed by a computer. In addition, any connection is properly referred to as a computer-readable medium. For example, if instructions are transmitted from a website, a server, or another remote source through a coaxial cable, an optical fiber, a twisted pair, a digital subscriber line (digital subscriber line, DSL), or a wireless technology such as infrared, radio, or microwave, the coaxial cable, the optical fiber, the twisted pair, the DSL, or the wireless technology such as infrared, radio, or microwave is included in a definition of the medium. However, it should be understood that the computer-readable storage medium and the data storage medium do not include connections, carriers, signals, or other transitory media, but actually mean non-transitory tangible storage media. Disks and discs used in this specification include a compact disc (compact disk, CD), a laser disc, an optical disc, a digital versatile disc (digital video disk, DVD), and a Blu-ray disc. The disks usually reproduce data magnetically, whereas the discs reproduce data optically by using lasers. Combinations of the above should also be included within the scope of the computer-readable medium.

An instruction may be executed by one or more processors such as one or more digital signal processors (DSP), a general microprocessor, an application-specific integrated circuit (ASIC), a field programmable gate array (FPGA), or an equivalent integrated circuit or discrete logic circuits. Therefore, the term "processor" used in this specification may refer to the foregoing structure, or any other structure that may be applied to implementation of the technologies described in this specification. In addition, in some aspects, the functions described with reference to the illustrative logical blocks, modules, and steps described in this specification may be provided within dedicated hardware and/or software modules configured for encoding and decoding, or may be incorporated into a combined codec. In addition, the technologies may be completely implemented in one or more circuits or logic elements.

The technologies in this application may be implemented in various apparatuses or devices, including a wireless handset, an integrated circuit (integrated circuit, IC), or a set of ICs (for example, a chip set). Various components, modules, or units are described in this disclosure to emphasize functional aspects of devices configured to perform the disclosed techniques, but do not necessarily require realization by different hardware units. Actually, as described above, various units may be combined into a codec hardware unit in combination with appropriate software and/or firmware, or may be provided by interoperable hardware units (including the one or more processors described above).

In the foregoing embodiments, the description of each embodiment has respective focuses. For a part that is not described in detail in an embodiment, refer to related descriptions in other embodiments.

The foregoing descriptions are merely example specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A video transmission method, comprising:
obtaining a first frame of image of video data, wherein the first frame of image comprises a plurality of sub-images, and the plurality sub-images comprise a first sub-image and a second sub-image;
performing layered encoding on the first sub-image to obtain a plurality of layers of bitstreams of the first sub-image;
sending the plurality of layers of bitstreams of the first sub-image to a receive end;
after completing layered encoding on the first sub-image, performing layered encoding on the second sub-image to obtain a plurality of layers of bitstreams of the second sub-image; and
sending the plurality of layers of bitstreams of the second sub-image to the receive end.

2. The method according to claim 1, wherein the sending the plurality of layers of bitstreams of the first sub-image to a receive end comprises:
sending the bitstreams of the first sub-image layer by layer to the receive end within a first preset time interval.

3. The method according to claim 2, wherein the sending the bitstreams of the first sub-image layer by layer to the receive end within a first preset time interval comprises:
sending the bitstreams of the first sub-image layer by layer to the receive end within the first preset time interval according to a coding order of the plurality of layers of bitstreams of the first sub-image.

4. The method according to claim 2 or 3, wherein when all the plurality of layers of bitstreams of the first sub-image fail to be sent within the first preset time interval, the method further comprises:
sending the bitstreams of the first sub-image layer by layer to the receive end within a second preset time interval, wherein the second preset time interval is adjacent to the first preset time interval and is later than the first preset time interval.

5. The method according to claim 2 or 3, wherein at least one layer of bitstreams in the plurality of layers of bitstreams of the first sub-image is successfully sent within the first preset time interval, and the method further comprises:
discarding a bitstream other than the at least one layer of bitstreams in the plurality of layers of bitstreams of the first sub-image.

6. The method according to claim 2 or 3, wherein the sending the plurality of layers of bitstreams of the second sub-image to the receive end comprises:
sending the bitstreams of the second sub-image layer by layer to the receive end within a second preset time interval, wherein the second preset time interval is adjacent to the first preset time interval and is later than the first preset time interval.

7. The method according to claim 6, wherein when all the plurality of layers of bitstreams of the first sub-image fail to be sent within the first preset time interval and all the plurality of layers of bitstreams of the second sub-image are successfully sent within the second preset time interval, there is still remaining time in the second preset time interval, and the method further comprises:
sending the bitstreams of the first sub-image layer by layer to the receive end within the remaining time in the second preset time interval.

8. The method according to claim 6, wherein when at least one layer of bitstreams in the plurality of layers of bitstreams of the first sub-image is successfully sent within the first preset time interval and all the plurality of layers of bitstreams of the second sub-image are successfully sent, there is still remaining time in the second preset time interval, and the method further comprises:
sending, layer by layer, a bitstream other than the at least one layer of bitstreams in the plurality of layers of bitstreams of the first sub-image to the receive end within the remaining time in the second preset time interval.

9. The method according to any one of claims 1 to 8, wherein before the performing layered encoding on the first sub-image to obtain a plurality of layers of bitstreams of the first sub-image, the method further comprises:
receiving feedback information from the receive end, wherein the feedback information comprises at least one of a first quantity, a second quantity, or first bandwidth, the first quantity indicates a quantity of layers of bitstreams that are received by the receive end and that are of a third sub-image, the second quantity indicates a quantity of layers of bitstreams that are successfully decoded by the receive end and that are of the third sub-image, the first bandwidth indicates bandwidth for transmitting the bitstreams of the third sub-image, and the bitstreams of the third sub-image are obtained by performing layered encoding on the third sub-image, wherein
the plurality of sub-images comprise the third sub-image, and the receive end has completed decoding of the bitstreams of the third sub-image, or the third sub-image belongs to a second frame of image, and the second frame of image is located before the first frame of image in a frame sequence of a video; and
the performing layered encoding on the first sub-image to obtain a plurality of layers of bitstreams of the first sub-image comprises:
performing layered encoding on the first sub-image to obtain the plurality of layers of bitstreams of the first sub-image based on the feedback information.

10. The method according to claim 9, wherein the performing layered encoding on the first sub-image to obtain the plurality of layers of bitstreams of the first sub-image based on the feedback information comprises:
determining an encoding parameter of the first sub-image based on the feedback information, wherein the encoding parameter comprises at least one of a start Qp, a quantity of layers, a coding scheme, or a reference frame of the first sub-image; and
performing layered encoding on the first sub-image to obtain the plurality of layers of bitstreams of the first sub-image based on the encoding parameter.

11. The method according to any one of claims 1 to 10, wherein a sub-image is a slice, a tile, a block, a macroblock, or a largest coding block of a frame of image.

12. A video transmission method, comprising:
receiving a plurality of layers of bitstreams of a first sub-image of a first frame of image from a transmit end;
decoding the plurality of layers of bitstreams of the first sub-image to obtain the first sub-image;
displaying the first sub-image;
receiving a plurality of layers of bitstreams of a second sub-image of the first frame of image from the transmit end;
decoding the plurality of layers of bitstreams of the second sub-image to obtain the second sub-image; and
displaying the second sub-image.

13. The method according to claim 12, wherein the decoding the plurality of layers of bitstreams of the first sub-image to obtain the first sub-image comprises:
decoding the bitstreams of the first sub-image layer by layer according to a coding order of the plurality of layers of bitstreams of the first sub-image, to obtain the first sub-image.

14. The method according to claim 12 or 13, wherein the receiving a plurality of layers of bitstreams of a first sub-image of a first frame of image from a transmit end comprises:
receiving, within a first preset time interval, the bitstreams of the first sub-image from the transmit end layer by layer.

15. The method according to claim 14, wherein when all the plurality of layers of bitstreams of the first sub-image fail to be received within the first preset time interval, the method further comprises:
receiving the bitstreams of the first sub-image layer by layer from the transmit end within a second preset time interval, wherein the second preset time interval is adjacent to the first preset time interval and is later than the first preset time interval.

16. The method according to claim 14, wherein the receiving a plurality of layers of bitstreams of a second sub-image of the first frame of image from the transmit end comprises:
receiving the bitstreams of the second sub-image layer by layer from the transmit end within a second preset time interval, wherein the second preset time interval is adjacent to the first preset time interval and is later than the first preset time interval.

17. The method according to claim 16, wherein when all the plurality of layers of bitstreams of the first sub-image fail to be received within the first preset time interval and all the plurality of layers of bitstreams of the second sub-image are successfully received within the second preset time interval, there is still remaining time in the second preset time interval, and the method further comprises:
receiving the bitstreams of the first sub-image layer by layer from the transmit end within the remaining time in the second preset time interval.

18. The method according to claim 16, wherein when at least one layer of bitstreams in the plurality of layers of bitstreams of the first sub-image is successfully received within the first preset time interval and all the plurality of layers of bitstreams of the second sub-image are successfully received, there is still remaining time in the second preset time interval, and the method further comprises:
receiving, layer by layer, a target bitstream from the transmit end within the remaining time in the second preset time interval, wherein the target bitstream comprises a bitstream other than the at least one layer of bitstreams in the plurality of layers of bitstreams of the first sub-image.

19. The method according to any one of claims 12 to 18, wherein the method further comprises:
sending feedback information to the transmit end, wherein the feedback information comprises at least one of a first quantity, a second quantity, or first bandwidth, the first quantity indicates a quantity of layers of received bitstreams of the first sub-image, the second quantity indicates a quantity of layers of successfully decoded bitstreams of the first sub-image, and the first bandwidth indicates bandwidth for transmitting the bitstreams of the first sub-image.

20. The method according to any one of claims 12 to 19, wherein a sub-image is a slice, a tile, a block, a macroblock, or a largest coding block of a frame of image.

21. A video transmission apparatus, wherein the apparatus comprises a processor and a transceiver coupled to the processor;
the processor is configured to obtain a first frame of image of video data, wherein the first frame of image comprises a plurality of sub-images, and the plurality sub-images comprise a first sub-image and a second sub-image; and perform layered encoding on the first sub-image to obtain a plurality of layers of bitstreams of the first sub-image;
the transceiver is configured to send the plurality of layers of bitstreams of the first sub-image to a receive end;
the processor is further configured to: after completing layered encoding on the first sub-image, perform layered encoding on the second sub-image to obtain a plurality of layers of bitstreams of the second sub-image; and
the transceiver is further configured to send the plurality of layers of bitstreams of the second sub-image to the receive end.

22. The apparatus according to claim 21, wherein the transceiver is specifically configured to:
send the bitstreams of the first sub-image layer by layer to the receive end within a first preset time interval.

23. The apparatus according to claim 22, wherein the transceiver is specifically configured to:
send the bitstreams of the first sub-image layer by layer to the receive end within the first preset time interval according to a coding order of the plurality of layers of bitstreams of the first sub-image.

24. The apparatus according to claim 22 or 23, wherein when all the plurality of layers of bitstreams of the first sub-image fail to be sent within the first preset time interval, the transceiver is further configured to:
send the bitstreams of the first sub-image layer by layer to the receive end within a second preset time interval, wherein the second preset time interval is adjacent to the first preset time interval and is later than the first preset time interval.

25. The apparatus according to claim 22 or 23, wherein at least one layer of bitstreams in the plurality of layers of bitstreams of the first sub-image is successfully sent within the first preset time interval, and the processor is further configured to:
discard a bitstream other than the at least one layer of bitstreams in the plurality of layers of bitstreams of the first sub-image.

26. The apparatus according to claim 22 or 23, wherein the transceiver is specifically configured to:
send the bitstreams of the second sub-image layer by layer to the receive end within a second preset time interval, wherein the second preset time interval is adjacent to the first preset time interval and is later than the first preset time interval.

27. The apparatus according to claim 26, wherein when all the plurality of layers of bitstreams of the first sub-image fail to be sent within the first preset time interval and all the plurality of layers of bitstreams of the second sub-image are successfully sent within the second preset time interval, there is still remaining time in the second preset time interval, and the transceiver is further configured to:
send the plurality of bitstreams of the first sub-image layer by layer to the receive end within the remaining time in the second preset time interval.

28. The apparatus according to claim 26, wherein when at least one layer of bitstreams in the plurality of layers of bitstreams of the first sub-image is successfully sent within the first preset time interval and all the plurality of layers of bitstreams of the second sub-image are successfully sent, there is still remaining time in the second preset time interval, and the transceiver is further configured to:
send, layer by layer, a bitstream other than the at least one layer of bitstreams in the plurality of layers of bitstreams of the first sub-image to the receive end within the remaining time in the second preset time interval.

29. The apparatus according to any one of claims 21 to 28, wherein
the transceiver is further configured to:
before performing layered encoding on the first sub-image to obtain the plurality of layers of bitstreams of the first sub-image, receive feedback information from the receive end, wherein the feedback information comprises at least one of a first quantity, a second quantity, or first bandwidth, the first quantity indicates a quantity of layers of bitstreams that are received by the receive end and that are of a third sub-image, the second quantity indicates a quantity of layers of bitstreams that are successfully decoded by the receive end and that are of the third sub-image, the first bandwidth indicates bandwidth for transmitting the bitstreams of the third sub-image, and the bitstreams of the third sub-image are obtained by performing layered encoding on the third sub-image, wherein
the plurality of sub-images comprise the third sub-image, and the receive end has completed decoding of the bitstreams of the third sub-image, or the third sub-image belongs to a second frame of image, and the second frame of image is located before the first frame of image in a frame sequence of a video; and
the processor is further configured to:
perform layered encoding on the first sub-image to obtain the plurality of layers of bitstreams of the first sub-image based on the feedback information.

30. The apparatus according to claim 29, wherein
the processor is specifically configured to:
determine an encoding parameter of the first sub-image based on the feedback information, wherein the encoding parameter comprises at least one of a start Qp, a quantity of layers, a coding scheme, or a reference frame of the first sub-image; and
perform layered encoding on the first sub-image to obtain the plurality of layers of bitstreams of the first sub-image based on the encoding parameter.

31. The apparatus according to any one of claims 21 to 30, wherein a sub-image is a slice, a tile, a block, a macroblock, or a largest coding block of a frame of image.

32. A video transmission apparatus, wherein the apparatus comprises a processor and a transceiver;
the transceiver is configured to receive a plurality of layers of bitstreams of a first sub-image of a first frame of image from a transmit end;
the processor is configured to decode the plurality of layers of bitstreams of the first sub-image to obtain the first sub-image;
the processor is further configured to control the first sub-image to be displayed in a display;
the transceiver is further configured to receive a plurality of layers of bitstreams of a second sub-image of the first frame of image from the transmit end;
the processor is further configured to decode the plurality of layers of bitstreams of the second sub-image to obtain the second sub-image; and
the processor is further configured to control the second sub-image to be displayed on the display.

33. The apparatus according to claim 32, wherein the processor is specifically configured to:
decode the bitstreams of the first sub-image layer by layer according to a coding order of the plurality of layers of bitstreams of the first sub-image, to obtain the first sub-image.

34. The apparatus according to claim 32 or 33, wherein the transceiver is specifically configured to:
receive, within a first preset time interval, the bitstreams of the first sub-image from the transmit end layer by layer.

35. The method according to claim 34, wherein when all the plurality of layers of bitstreams of the first sub-image fail to be received within the first preset time interval, the transceiver is further configured to:
receive the bitstreams of the first sub-image layer by layer from the transmit end within a second preset time interval, wherein the second preset time interval is adjacent to the first preset time interval and is later than the first preset time interval.

36. The apparatus according to claim 34, wherein the transceiver is specifically configured to:
receive the bitstreams of the second sub-image layer by layer from the transmit end within a second preset time interval, wherein the second preset time interval is adjacent to the first preset time interval and is later than the first preset time interval.

37. The apparatus according to claim 36, wherein when all the plurality of layers of bitstreams of the first sub-image fail to be received within the first preset time interval and all the plurality of layers of bitstreams of the second sub-image are successfully received within the second preset time interval, there is still remaining time in the second preset time interval, and the transceiver is further configured to:
receive the bitstreams of the first sub-image layer by layer from the transmit end within the remaining time in the second preset time interval.

38. The apparatus according to claim 36, wherein when at least one layer of bitstreams in the plurality of layers of bitstreams of the first sub-image is successfully received within the first preset time interval and all the plurality of layers of bitstreams of the second sub-image are successfully received, there is still remaining time in the second preset time interval, and the transceiver is further configured to:
receive, layer by layer, a target bitstream from the transmit end within the remaining time in the second preset time interval, wherein the target bitstream comprises a bitstream other than the at least one layer of bitstreams in the plurality of layers of bitstreams of the first sub-image.

39. The apparatus according to any one of claims 32 to 38, wherein the transceiver is further configured to:
send feedback information to the transmit end, wherein the feedback information comprises at least one of a first quantity, a second quantity, or first bandwidth, the first quantity indicates a quantity of layers of received bitstreams of the first sub-image, the second quantity indicates a quantity of layers of successfully decoded bitstreams of the first sub-image, and the first bandwidth indicates bandwidth for transmitting the bitstreams of the first sub-image.

40. The apparatus according to any one of claims 32 to 39, wherein a sub-image is a slice, a tile, a block, a macroblock, or a largest coding block of a frame of image.

41. A computer-readable storage medium, configured to store a computer program, wherein the computer program comprises instructions used to implement the method according to any one of claims 1 to 11 or any one of claims 12 to 20.

42. A computer program product, wherein the computer program product comprises instructions, and when the instructions are run on a computer or a processor, the computer or the processor is enabled to implement the method according to any one of claims 1 to 11 or any one of claims 12 to 20.
